# EUROPEAN PATENT APPLICATION

(11) **EP 4 576 883 A1**
(43) Date of publication of application: **25.06.2025**
(21) Application number: 23859268.7
(22) Date of filing: 25.08.2023
(51) Int. Cl.: H04W 52/02

(54) **DATA TRANSMISSION METHOD AND APPARATUS**

(30) Priority: 27.08.2022 CN 202211037914
(71) Applicant: Huawei Technologies Co., Ltd., Shenzhen, Guangdong 518129 (CN)
(72) Inventor: XU, Xiuqiang, Shenzhen, Guangdong 518129 (CN); WANG, Lei, Shenzhen, Guangdong 518129 (CN); CHEN, Yan, Shenzhen, Guangdong 518129 (CN)
(74) Representative: Gill Jennings & Every LLP
(86) International application number: PCT/CN2023/115018
(87) International publication number: WO 2024/046236

(57) **Abstract**

This application provides a data transmission method and apparatus. The method includes: A first terminal apparatus starts or restarts a first timer, where the first timer includes an opportunistic multiple access timer (opma-Timer); the first terminal apparatus receives first uplink grant information when the first timer runs, where a time-frequency resource corresponding to the first uplink grant information is used for uplink transmission of a second terminal apparatus, and the second terminal apparatus is different from the first terminal apparatus; and the first terminal apparatus sends uplink data based on the time-frequency resource. According to this application, power consumption of a terminal can be reduced, data transmission reliability can be improved, and a delay can be reduced.

## Description

This application claims priority to Chinese Patent Application No. 202211037914.6, filed with the China National Intellectual Property Administration on August 27, 2022 and entitled "DATA TRANSMISSION METHOD AND APPARATUS", which is incorporated herein by reference in its entirety.

### TECHNICAL FIELD

This application relates to the field of communication technologies, and in particular, to a data transmission method and apparatus.

### BACKGROUND

In a mobile communication system, for example, a 5th generation mobile communication technology (5th generation mobile communication technology, 5G) new radio (new radio, NR) system, to improve a multiplex transmission capability of a terminal, in an uplink data transmission process, when the terminal receives uplink grant information and some conditions are met, the terminal may perform uplink transmission based on a time-frequency resource configured by a network device (for example, a base station) for another terminal. This uplink transmission manner may be referred to as uplink opportunistic (opportunistic) transmission or affiliated (affiliated) transmission. The terminal that performs uplink data transmission in the transmission manner may be referred to as a secondary terminal, and the time-frequency resource is allocated by the network device to a primary terminal.

Currently, in the uplink opportunistic transmission, the secondary terminal device continuously monitors uplink grant information sent by the network device to the primary terminal device, determines, based on the uplink grant information, a time-frequency resource of the primary terminal, and uses the time-frequency resource to perform data transmission. When the secondary terminal fails to obtain a valid dynamic grant through monitoring, the secondary terminal performs monitoring for a long time. As a result, power consumption of the terminal is high, data transmission reliability is poor, and a delay is high.

### SUMMARY

This application discloses a data transmission method and apparatus, to reduce power consumption of a terminal, improve data transmission reliability, and reduce a delay.

According to a first aspect, an embodiment of this application provides a data transmission method, to reduce power consumption of a terminal, improve data transmission reliability, and reduce a delay. The method may be implemented by a first terminal apparatus. For example, the first terminal apparatus is a terminal device (which may be referred to as a terminal device corresponding to the first terminal apparatus) or a component in the terminal device. The component in this application is, for example, at least one of a processor, a transceiver, a processing module, or a transceiver module. In this application, the terminal device corresponding to the first terminal apparatus may be a secondary terminal. For example, the method is performed by the first terminal apparatus. The method may be implemented by using the following steps: The first terminal apparatus starts or restarts a first timer, where the first timer includes an opportunistic multiple access timer (opma-Timer); and the first terminal apparatus receives first uplink grant information when the first timer runs, where a time-frequency resource corresponding to the first uplink grant information is used for uplink transmission of a second apparatus, in other words, a terminal device corresponding to the second terminal apparatus is a primary terminal. In addition, the first timer is set, so that a case in which the first terminal apparatus performs monitoring for a long time when the first terminal apparatus fails to obtain a valid dynamic grant through monitoring can be avoided, thereby reducing power consumption of the terminal, improving data transmission reliability, and reducing a delay. The second terminal apparatus is different from the first terminal apparatus. The first terminal apparatus sends uplink data based on the time-frequency resource.

In a possible implementation, that the first terminal apparatus receives first uplink grant information includes: The first terminal apparatus receives the first uplink grant information from the second terminal apparatus; or the first terminal apparatus receives the first uplink grant information from a network device. Therefore, the first terminal apparatus may flexibly obtain the first uplink grant information, to meet transmission requirements in different scenarios.

In another possible implementation, the method further includes: The first terminal apparatus initiates a dynamic grant-free transmission process or a random access process when the first timer expires. In this manner, a case in which the first terminal apparatus performs monitoring for a long time when the first terminal apparatus fails to obtain a valid dynamic grant through monitoring can be avoided, thereby reducing power consumption of the terminal, improving data transmission reliability, and reducing a delay.

**In** another possible implementation, that the first terminal apparatus starts or restarts a first timer includes: The first terminal apparatus starts or restarts the first timer when a first condition is met, where the first condition includes at least one of the following: when/after the first terminal apparatus initiates an opportunistic multiple access transmission process; when/after the first terminal apparatus receives the first uplink grant information; when/after the first terminal apparatus determines that the first uplink grant information is a valid grant; when/after the first terminal apparatus receives second uplink grant information, where the second uplink grant information is used to grant data transmission of the first terminal apparatus, or is used to grant data transmission of a group of terminal apparatuses including the first terminal apparatus; when/after the first terminal apparatus sends uplink data; when/after the first terminal apparatus completes a random access process; or when/after an opportunistic multiple access response monitoring timer and/or an opportunistic multiple access autonomous retransmission timer in the first terminal apparatus expire/expires. **In** this manner, after successfully performing data transmission once, the first terminal apparatus can further continue to obtain the first uplink grant information, and perform opportunistic transmission by using the time-frequency resource of the second terminal apparatus, to improve a resource overload rate, so that a system can support access and data transmission of more terminal apparatuses.

**In** another possible implementation, that the first terminal apparatus initiates an opportunistic multiple access transmission process includes one of the following: The first terminal apparatus autonomously initiates the opportunistic multiple access transmission process; the first terminal apparatus initiates the opportunistic multiple access transmission process after sending first indication information to the network device, where the first indication information is used to notify the network device that the first terminal apparatus is to initiate the opportunistic multiple access transmission process, or is used by the first terminal apparatus to request to initiate the opportunistic multiple access transmission process; or the first terminal apparatus initiates the opportunistic multiple access transmission process after receiving second indication information from the network device, where the second indication information indicates the first terminal apparatus to initiate the opportunistic multiple access transmission process. **In** this manner, the network device may learn that the first terminal apparatus is to perform opportunistic transmission. Therefore, the network device may detect and receive data of the first terminal apparatus on the time-frequency resource indicated by the first grant information, to improve reliability of detection and data receiving.

**In** another possible implementation, that the first terminal apparatus starts or restarts the first timer when/after sending the uplink data includes: The first terminal apparatus starts the first timer on a 1^{st} symbol/last symbol or after the 1^{st} symbol/last symbol of a time domain resource used to send the uplink data.

**In** another possible implementation, that the first terminal apparatus initiates a dynamic grant-free transmission process or a random access process when the first timer expires includes: The first terminal apparatus determines, based on an initial transmission situation of the first terminal apparatus when the first timer expires, to initiate the dynamic grant-free transmission process or the random access process.

**In** another possible implementation, that the first terminal apparatus determines, based on an initial transmission situation of the first terminal apparatus when the first timer expires, to initiate the dynamic grant-free transmission process or the random access process includes: The first terminal apparatus initiates the dynamic grant-free transmission process when the first timer expires and the first terminal apparatus does not perform initial transmission. In this manner, security can be improved, and a delay can be reduced.

In another possible implementation, that the first terminal apparatus determines, based on an initial transmission situation of the first terminal apparatus when the first timer expires, to initiate the dynamic grant-free transmission process or the random access process includes: The first terminal apparatus initiates the random access process when the first timer expires and the first terminal apparatus has performed initial transmission.

In another possible implementation, the method further includes: The first terminal apparatus stops the first timer when a second condition is met, where the second condition includes one or more of the following: when/after the first terminal apparatus terminates the opportunistic multiple access transmission process; when/after the first terminal apparatus receives third indication information from the network device, where the third indication information indicates that the opportunistic multiple access transmission process ends; when/after a radio resource control RRC state of the first terminal apparatus changes; or when/after a time alignment timer (Time Alignment Timer) in the first terminal apparatus expires. In this manner, when the data transmission of the first terminal apparatus is completed or a condition for performing opportunistic multiple access is not met, obtaining of the first uplink grant information is terminated, thereby reducing power consumption of the first terminal apparatus. In addition, the first terminal apparatus can select a more appropriate data transmission process, for example, the random access process, to improve data transmission reliability and reduce a delay.

In another possible implementation, the method further includes: The first terminal apparatus determines to choose to perform the opportunistic multiple access process.

In another possible implementation, before the first terminal apparatus determines to choose to perform the opportunistic multiple access process, the method further includes: The first terminal apparatus determines whether a third condition is met; and the first terminal apparatus performs a first-type dynamic grant-free transmission process if the third condition is met; or the first terminal apparatus performs the opportunistic multiple access process if the third condition is not met, where the third condition includes one or more of the following: The first terminal apparatus is synchronized with the network device; channel quality of the first terminal apparatus meets a first preset value; a measurement result of at least one of beam directions configured by the network device for dynamic grant-free transmission of the first terminal apparatus meets a preset condition; or a data buffer size of the first terminal apparatus meets a second preset value. In this manner, the first-type dynamic grant-free transmission process can be preferentially selected, thereby avoiding resource contention of terminal devices and improving resource utilization.

According to a second aspect, this application provides a data transmission method, to reduce power consumption of a terminal, improve data transmission reliability, and reduce a delay. The method may be implemented by a network device or a component in the network device. The component in this application is, for example, at least one of a processor, a transceiver, a processing module, or a transceiver module. For example, the method is performed by the network device. The method may be implemented by using the following steps: The network device determines first uplink grant information, where a time-frequency resource corresponding to the first uplink grant information is used for uplink transmission of a second terminal apparatus; and the network device sends the first uplink grant information. The first terminal apparatus may send uplink data to the network device based on the time-frequency resource corresponding to the first uplink grant information. In this manner, power consumption of the terminal can be reduced, data transmission reliability can be improved, and a delay can be reduced.

According to a third aspect, an embodiment of this application provides a data transmission apparatus. The apparatus may implement the method according to any one of the first aspect or the possible implementations of the first aspect. The apparatus has a function of the first terminal apparatus. The apparatus is, for example, a terminal device corresponding to the first terminal apparatus, or a functional module in the terminal device.

In an optional implementation, the apparatus may include modules that are in one-to-one correspondence with the methods/operations/steps/actions described in the first aspect. The modules may be hardware circuits or software, or may be implemented by a combination of the hardware circuits and the software. In an optional implementation, the apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for the functional modules.

For example, when the apparatus is configured to perform the method described in the first aspect, the apparatus may include a transceiver module and a processing module. The processing module is configured to start or restart a first timer, where the first timer includes an opportunistic multiple access timer (opma-Timer). The transceiver module is configured to receive first uplink grant information when the first timer runs, where a time-frequency resource corresponding to the first uplink grant information is used for uplink transmission of a second terminal apparatus, and the second terminal apparatus is different from the apparatus. The transceiver module is further configured to send uplink data on a video resource.

In a possible implementation, the transceiver module is configured to: receive the first uplink grant information from the second terminal apparatus; or receive the first uplink grant information from a network device.

In another possible implementation, the processing module is further configured to initiate a dynamic grant-free transmission process or a random access process when the first timer expires.

In another possible implementation, the processing module is further configured to start or restart the first timer when a first condition is met, where the first condition includes at least one of the following: when/after the apparatus initiates an opportunistic multiple access transmission process; when/after the apparatus receives the first uplink grant information; when/after the apparatus determines that the first uplink grant information is a valid grant; when/after the apparatus receives second uplink grant information, where the second uplink grant information is used to grant data transmission of the first terminal apparatus, or is used to grant data transmission of a group of terminal apparatuses including the first terminal apparatus; when/after the apparatus sends uplink data; when/after the apparatus completes a random access process; or when/after an opportunistic multiple access response monitoring timer and/or an opportunistic multiple access autonomous retransmission timer in the apparatus expire/expires.

In another possible implementation, the processing module is configured to autonomously trigger the opportunistic multiple access transmission process; the processing module is configured to initiate the opportunistic multiple access transmission process after sending first indication information to the network device, where the first indication information is used to notify the network device that the apparatus is to initiate the opportunistic multiple access transmission process, or is used by the apparatus to request to initiate the opportunistic multiple access transmission process; or the processing module is configured to initiate the opportunistic multiple access transmission process after receiving second indication information from the network device, where the second indication information indicates the apparatus to initiate the opportunistic multiple access transmission process.

In another possible implementation, the processing module is configured to start the first timer on a 1^{st} symbol/last symbol or after the 1^{st} symbol/last symbol of a time domain resource used to send the uplink data.

In another possible implementation, the processing module is configured to determine, based on an initial transmission situation of the apparatus when the first timer expires, to initiate the dynamic grant-free transmission process or the random access process.

In another possible implementation, the processing module is configured to determine, when the first timer expires and the apparatus does not perform initial transmission, to initiate the dynamic grant-free transmission process.

In another possible implementation, the processing module is configured to determine, when the first timer expires and the apparatus has performed initial transmission, to initiate the random access process.

In another possible implementation, the processing module is configured to stop the first timer when a second condition is met, where the second condition includes one or more of the following: when/after the apparatus terminates the opportunistic multiple access transmission process; when/after the apparatus receives third indication information from the network device, where the third indication information indicates that the opportunistic multiple access transmission process ends; when/after a radio resource control RRC state of the apparatus changes; or when/after a time alignment timer (Time Alignment Timer) in the apparatus expires.

In another possible implementation, the processing module is further configured to determine to choose to perform the opportunistic multiple access process.

In another possible implementation, the processing module is further configured to: before determining to choose to perform the opportunistic multiple access process, determine whether a third condition is met. The processing module is further configured to: perform a first-type dynamic grant-free transmission process if the third condition is met; or perform the opportunistic multiple access process if the third condition is not met, where the third condition includes one or more of the following: The apparatus is synchronized with the network device; channel quality of the apparatus meets a first preset value; a measurement result of at least one of beam directions configured by the network device for dynamic grant-free transmission of the apparatus meets a preset condition; or a data buffer size of the apparatus meets a second preset value.

For example, when the apparatus is configured to perform the method described in the second aspect, the apparatus may include a transceiver module and a processing module. The processing module may be configured to determine first uplink grant information, and the transceiver module may be configured to send the first uplink grant information. For the first uplink grant information, refer to the descriptions of the first uplink grant information in the first aspect.

For another example, the apparatus includes a processor, coupled to a memory, and configured to execute instructions in the memory, to implement the method in the first aspect. Optionally, the apparatus further includes another component, for example, an antenna, an input/output module, and an interface. The component may be hardware, software, or a combination of software and hardware.

According to a fourth aspect, an embodiment of this application provides a computer-readable storage medium. The computer-readable storage medium is configured to store a computer program or instructions. When the computer program or the instructions are run, the method according to any one of the first aspect, the possible implementations of the first aspect, the second aspect, or the possible implementations of the second aspect is implemented.

According to a fifth aspect, an embodiment of this application provides a computer program product including instructions. When the computer program product runs on a computer, the method according to any one of the first aspect, the possible implementations of the first aspect, the second aspect, or the possible implementations of the second aspect is implemented.

According to a sixth aspect, an embodiment of this application provides a chip system. The chip system includes a logic circuit (which may alternatively be understood as that the chip system includes a processor, and the processor may include a logic circuit and the like), and may further include an input/output interface. The input/output interface may be configured to receive a message, or may be configured to send a message. For example, when the chip system is configured to implement a function of a first terminal apparatus, the input/output interface may be configured to receive first uplink grant information. The input/output interface may be a same interface, that is, a same interface can implement both a sending function and a receiving function. Alternatively, the input/output interface includes an input interface and an output interface. The input interface is configured to implement a receiving function, that is, configured to receive a message. The output interface is configured to implement a sending function, that is, configured to send a message. The logic circuit may be configured to perform an operation other than receiving and sending functions in the first aspect. The logic circuit may be further configured to transmit a message to the input/output interface, or receive a message from another communication apparatus through the input/output interface. The chip system may be configured to implement the method according to any one of the first aspect, the possible implementations of the first aspect, the second aspect, or the possible implementations of the second aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to a seventh aspect, an embodiment of this application provides a communication system. The communication system may include a first terminal apparatus and a network device. The first terminal apparatus may be configured to perform the method according to the first aspect, and the network device may be configured to perform the method according to the second aspect.

For technical effects brought by the second aspect to the seventh aspect, refer to the descriptions of the first aspect. Details are not described herein again.

### BRIEF DESCRIPTION OF DRAWINGS

The following describes the accompanying drawings used in this application.
FIG. 1 is a diagram of an architecture of a wireless communication system according to this application;
FIG. 2a is a diagram of an architecture of a protocol stack of a wireless communication system according to this application;
FIG. 2b is a diagram of an architecture of a protocol stack of another wireless communication system according to this application;
FIG. 3 is a schematic flowchart of RRC state switching according to this application;
FIG. 4 is a schematic flowchart of a random access method according to this application;
FIG. 5 is a schematic flowchart of another random access method according to this application;
FIG. 6 is a schematic flowchart of an uplink data transmission manner according to this application;
FIG. 7 is a diagram of a relationship between a beam and a spatial direction according to this application;
FIG. 8 is a diagram of a relationship between a beam and a transmission resource according to this application;
FIG. 9 is a schematic flowchart of an uplink opportunistic transmission method according to this application;
FIG. 10 is a schematic flowchart of a data transmission method according to this application;
FIG. 11 is a schematic flowchart of another data transmission method according to this application;
FIG. 12 is a schematic flowchart of another data transmission method according to this application;
FIG. 13 is a schematic flowchart of another data transmission method according to this application;
FIG. 14 is a diagram of a structure of a data transmission apparatus according to this application;
FIG. 15 is a diagram of a structure of another data transmission apparatus according to this application; and
FIG. 16 is a diagram of a structure of another data transmission apparatus according to this application.

### DESCRIPTION OF EMBODIMENTS

Embodiments of this application provide a data transmission method and apparatus. The method and the apparatus are based on a same inventive concept. Because problem-resolving principles of the method and the apparatus are similar, mutual reference may be made to implementations of the apparatus and the method, and repeated parts are not described. In descriptions of embodiments of this application, the term "and/or" describes an association relationship between associated objects, and indicates that three relationships may exist. For example, A and/or B may indicate the following three cases: Only A exists, both A and B exist, and only B exists. The character "/" generally indicates an "or" relationship between the associated objects. In this application, "at least one" means one or more, and "a plurality of" means two or more. In addition, it should be understood that in the descriptions of this application, terms such as "first" and "second" are merely used for distinguishing and description, but should not be understood as indicating or implying relative importance, or should not be understood as indicating or implying a sequence.

The data transmission method provided in embodiments of this application may be applied to a 4th generation (4th generation, 4G) communication system, for example, a long term evolution (long term evolution, LTE) communication system, or may be applied to a 5th generation (5th generation, 5G) communication system, for example, a 5G new radio (new radio, NR) communication system, or applied to various future communication systems, for example, a 6th generation (6th generation, 6G) communication system. The method provided in embodiments of this application may be further applied to a Bluetooth system, a Wi-Fi system, a LoRa system, or an internet of vehicles system. The method provided in embodiments of this application may be further applied to a satellite communication system. The satellite communication system may be integrated with the foregoing communication system.

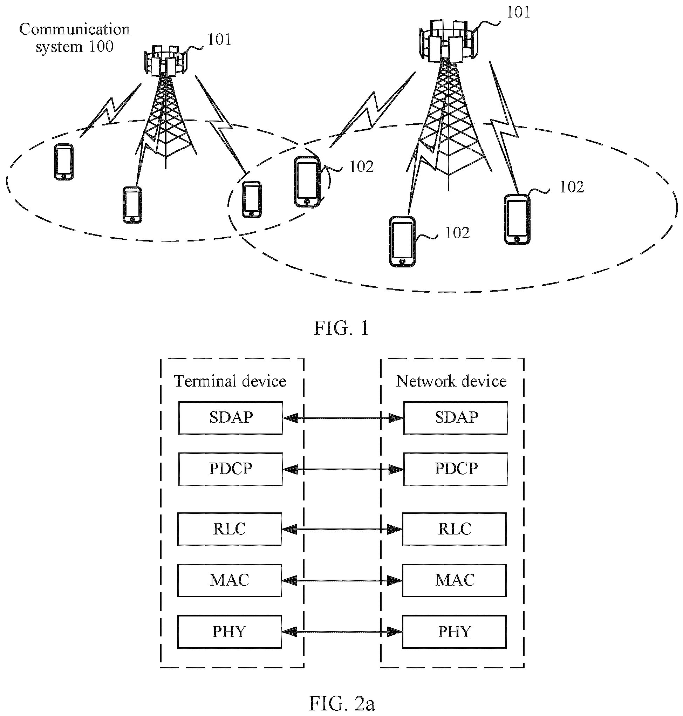

FIG. 1 is a diagram of an architecture of a wireless communication system according to this application. An application scenario used in this application is described by using the communication system architecture shown in FIG. 1 as an example. The communication system 100 includes a network device 101 and a terminal device 102. The apparatus provided in embodiments of this application may be used in the network device 101 or the terminal device 102. It may be understood that FIG. 1 shows only one possible communication system architecture to which embodiments of this application may be applied. In another possible scenario, the communication system architecture may alternatively include another device.

The network device 101 is a node in a radio access network (radio access network, RAN), and may also be referred to as a base station or a RAN node (or device). Currently, some examples of the network device 101 are: a gNB/NR-NB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), a satellite device, a network device in a 5G communication system, and a network device in a possible communication system in the future. Alternatively, the network device 101 may be another device that has a network device function. For example, the network device 101 may alternatively be a device that functions as a network device in device to device (device to device, D2D) communication, internet of vehicles communication, or machine-to-machine communication. Alternatively, the network device 101 may be a network device in a possible future communication system.

In some deployments, the gNB may include a central unit (central unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from the information at the PHY layer. Therefore, in the architecture, higher layer signaling such as RRC layer signaling or PHCP layer signaling may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

The terminal device 102 may also be referred to as user equipment (user equipment, UE), a mobile station (mobile station, MS), a mobile terminal (mobile terminal, MT), or the like, and is a device that provides a user with voice or data connectivity, or may be an internet of things device. For example, the terminal device includes a handheld device, a vehicle-mounted device, or the like that has a wireless connection function. Currently, the terminal device may be a mobile phone, a tablet computer, a laptop computer, a palmtop computer, a mobile internet device (mobile internet device, MID), a wearable device (for example, a smartwatch, a smart band, or a pedometer), a vehicle-mounted device (for example, a car, a bicycle, an electric car, an airplane, a ship, a train, or a high-speed rail), a virtual reality (virtual reality, VR) device, an augmented reality (augmented reality, AR) device, a wireless terminal in industrial control, a smart household device (for example, a refrigerator, a television, an air conditioner, or a meter), an intelligent robot, workshop equipment, a wireless terminal in self driving, a wireless terminal in remote surgery, a wireless terminal in a smart grid (smart grid), a wireless terminal in transportation safety, a wireless terminal in a smart city, a wireless terminal in a smart home, a flight device (for example, an intelligent robot, a hot air balloon, an uncrewed aerial vehicle, or an airplane), or the like. The terminal device may alternatively be another device having a terminal function. For example, the terminal device may alternatively be a device that functions as a terminal in D2D communication. A terminal device that has a wireless receiving/sending function and a chip that may be disposed in the terminal device are collectively referred to as the terminal device in this application.

With reference to the communication system shown in FIG. 1, the following describes in detail the data transmission method provided in embodiments of this application.

To better understand solutions provided in embodiments of this application, the following first describes some terms, concepts, or procedures in embodiments of this application.

First, a status of the terminal device is described.

FIG. 2a is a diagram of an architecture of a protocol stack of a wireless communication system according to this application. As shown in FIG. 2a, a user plane protocol stack for communication between the terminal device and the network device includes a service data adaptation (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer.

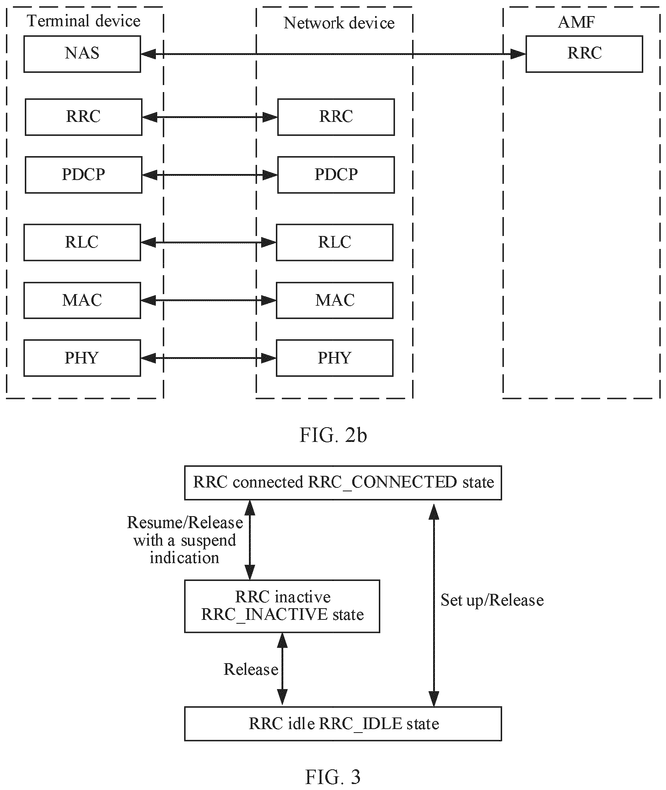

FIG. 2b is a diagram of an architecture of a protocol stack of another wireless communication system according to this application. As shown in FIG. 2b, a control plane protocol stack for communication between the terminal device and the network device includes a non-access stratum (non-access stratum, NAS), a radio resource control (radio resource control, RRC) layer, a PDCP layer, an RLC layer, a MAC layer, and a PHY layer.

For the RRC layer, there are several RRC states of the terminal device: an RRC idle (RRC_IDLE) state, an RRC inactive (RRC_INACTIVE) state, and an RRC connected (RRC_CONNECTED) state. When the terminal device has set up an RRC connection, the terminal device is in the RRC_CONNECTED state or the RRC_INACTIVE state. If the terminal device does not set up an RRC connection, the terminal device is in the RRC_IDLE state. The RRC_INACTIVE state is a state introduced for the terminal device in the 5G NR communication system. The RRC_INACTIVE state is mainly for a case in which "a terminal device that performs infrequent (infrequent) data transmission is usually kept in the RRC_INACTIVE state by a network".

FIG. 3 is a schematic flowchart of RRC state switching according to this application. The terminal device performs different operations in different RRC states. As shown in FIG. 3, the terminal device is initially in the RRC_IDLE state. When the terminal device needs to perform data transmission, the terminal device performs a random access process to set up (set up) an RRC connection to the network device, and enters the RRC_CONNECTED state. After entering the RRC_CONNECTED state, the terminal device starts to perform data transmission. To set up the RRC connection, the terminal device sends a connection setup request message, for example, RRCSetupRequest, to the network device in a process of initiating random access, and receives a connection setup message, for example, an RRCSetup message, sent by the network device.

When the terminal device does not need to perform data transmission subsequently, the network device may release the terminal device, so that the terminal device enters the RRC_IDLE state or the RRC_INACTIVE state. For example, the network device sends a release (release) message with a suspend indication, for example, RRCRelease with suspend indication, so that the terminal device enters the RRC_INACTIVE state. Alternatively, the network device sends a release message, for example, an RRC Release message, so that the terminal device enters the RRC_IDLE state.

In addition, the terminal device in the RRC_INACTIVE state may further return to the RRC_CONNECTED state by using a resume (resume) message. For example, the terminal device sends an RRC resume request (RRCResumeRequest), receives an RRC resume (RRCResume) message, and returns to the RRC_CONNECTED state. Similarly, the network device may further release the terminal device, so that the terminal device enters the RRC_IDLE state.

For brief description, the RRC_IDLE state may also be briefly described as an idle state or an IDLE state; the RRC_INACTIVE state may also be briefly described as an inactive state or an INACTIVE state; and the RRC_CONNECTED state may also be briefly described as a connected state, an active state, or a CONNECTED state.

In conclusion, the several RRC states (which may also be referred to as states for short) of the terminal device have been described. Embodiments of this application may be used by the terminal device in the RRC connected state, the RRC idle state, or the RRC inactive state to implement uplink data transmission, or may be used by a terminal device in a state other than the RRC connected state, the RRC idle state, and the RRC inactive state, for example, a terminal device that is not attached to a network or that does not perform downlink synchronization with the network, to implement uplink data transmission. This is not specifically required.

Currently, the terminal device in the RRC idle state or the RRC inactive state needs to perform the random access (random access, RA) process to set up the RRC connection. It may be understood that the RA may include 4-step RA (4-step RA) and 2-step RA (2-step RA).

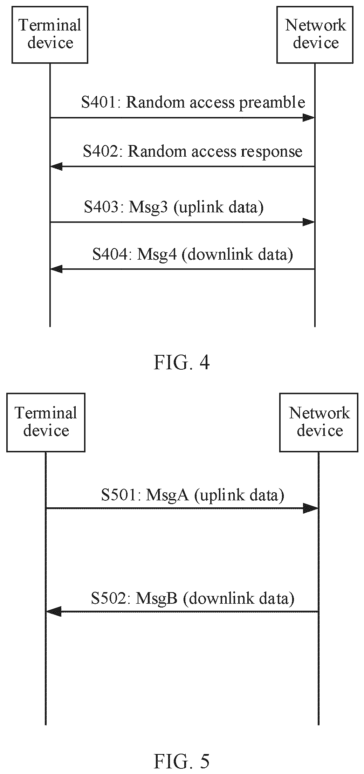

FIG. 4 is a schematic flowchart of a random access method according to this application, and specifically shows an example of a small data transmission process in the 4-step RA.

S401: The terminal device sends a message 1 (Msg1) to the network device, and the network device receives the message 1 from the terminal device, where the message 1 is a random access preamble (random access preamble) (which may be referred to as a preamble for short below), and the preamble is used by the network device to estimate a timing advance (timing advance, TA) of the terminal device.

S402: The network device sends a message 2 (Msg2) to the terminal device, and the terminal device receives the message 2 from the network device.

The message 2 is a random access response (random access response).

S403: The terminal device sends a message 3 (Msg3) to the network device, and the network device receives the message 3 from the terminal device.

The Msg3 may carry uplink data, for example, small data.

S404: The network device sends a message 4 (Msg4) to the terminal device, and the terminal device receives the message 4 from the network device.

Optionally, the Msg4 carries downlink data.

FIG. 5 is a schematic flowchart of another random access method according to this application, and specifically shows an example of a small data transmission process in the 2-step RA.

S501: The terminal device sends a message A (MsgA) to the network device, and the network device receives the message A from the terminal device.

The MsgA may carry uplink data, for example, small data.

A transmission channel of the MsgA may include a physical random access channel (physical random access channel, PRACH) and a physical uplink shared channel (physical uplink shared channel, PUSCH). The PRACH is used to send a preamble, used by the network device to estimate a timing advance of the terminal device, so that the terminal device implements uplink synchronization with the network device. The terminal device may further send the uplink data (for example, the small data) through the PUSCH of the MsgA. In other words, the PUSCH may be configured to carry the uplink data.

S502: The network device returns a message B (MsgB) to the terminal, and the terminal device receives the message B from the network device.

Downlink data may be carried in the MsgB. Early transmitted downlink data may be transmitted through a physical downlink shared channel PDSCH of the MsgB.

In this application, the terminal device may send uplink data to the network device.

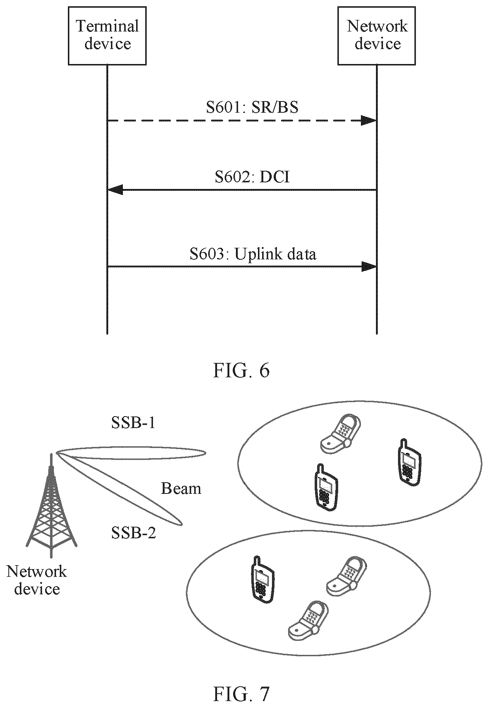

FIG. 6 is a schematic flowchart of an uplink data transmission manner according to this application. The uplink data transmission manner is uplink transmission based on a dynamic grant (dynamic grant, DG) (or referred to as a dynamic uplink grant (dynamic UL grant)).

S601: The terminal device sends an SR/a BS to the network device.

Before monitoring DCI, the terminal device may first send the scheduling request (scheduling request, SR) to the network device through a physical uplink control channel (physical uplink control channel, PUCCH) or report the buffer state (buffer state, BS) to the network device through a physical uplink shared channel (physical uplink shared channel, PUSCH), to notify a base station of an uplink sending requirement or the buffer state. This helps the network device perform an uplink grant and resource scheduling based on the requirement.

S602: The network device sends the DCI to the terminal device.

When the terminal device needs to send user plane data to the network device, the terminal device may monitor the downlink control information (downlink control information, DCI) delivered by the network device through a physical downlink control channel (physical downlink control channel, PDCCH). The DCI includes the uplink grant (uplink grant, UL grant). The uplink grant may be used to authorize the terminal to send the uplink data on a specified time-frequency resource by using a specified parameter, for example, a specified modulation and coding scheme (modulation and coding scheme, MCS).

S603: The terminal device sends the uplink data to the network device.

It may be understood that the uplink data transmission manner provided in embodiments of this application may further include a grant-free (grant-free, GF) data transmission process. There are two types of GF data transmission processes: a first-type dynamic grant-free transmission process and a second-type dynamic grant-free transmission process. In the first-type dynamic grant-free transmission process, a resource, for example, a time-frequency resource and/or a reference signal such as a demodulation reference signal (demodulation reference signal, DMRS), used for transmission is configured by the network device by using terminal-specific signaling such as a terminal-specific RRC message, or the resource, for example, a time-frequency reference signal, used for transmission is dedicated to the terminal instead of being used by a plurality of terminals through contention. In other words, it may be understood as that the terminal device directly sends data by using the resource preconfigured by the network device, and does not need to send a random access preamble. This is applicable to a case in which the terminal device and the network device have completed uplink synchronization, for example, semi-persistent scheduling (semi-persistent scheduling, SPS) and transmission that is based on a preconfigured uplink resource (preconfigured uplink resource, PUR) in LTE, configured grant (configured grant, CG) transmission in 5G NR, or CG small data transmission CG-SDT. In the second-type dynamic grant-free transmission process, a resource, for example, a time-frequency resource, used for transmission is configured by the network device by using a broadcast message such as a system message, or the resource, for example, the time-frequency resource, used for transmission is not dedicated to the terminal but is used by a plurality of terminals through contention. It may be understood as that the terminal device completes uplink data transmission in a random access process, for example, the 4-step RA (which may also be referred to as early data transmission (early data transmission, EDT)) in which uplink data transmission and downlink data transmission are respectively completed in the Msg3 and the Msg4, and the 2-step RA in which uplink data transmission and downlink data transmission are respectively completed in the MsgA and the MsgB. This type of dynamic grant-free transmission technology is also referred to as RA small data transmission RA-SDT in 5G NR. A feature of the technology is that the terminal further needs to send a random access preamble preamble to a base station before sending data (the Msg1) or when sending data (the MsgA), and the random access preamble is used for uplink synchronization between the terminal and the base station. A common feature of the two types of dynamic grant-free transmission processes is that before performing uplink transmission, the terminal device does not need to obtain, by monitoring a dynamic grant of the network device, a time-frequency resource and a transmission parameter that are used for data sending, but sends the data to the network device by using a preconfigured time-frequency resource and transmission parameter. The time-frequency resource and the transmission parameter that are used for data transmission are usually configured by the network device by using higher layer signaling such as a system message (system information, SI) or terminal-specific (UE-specific) RRC signaling such as an RRC reconfiguration message or an RRC release message.

That the terminal device multiplexes a same time-frequency resource to perform uplink data transmission is an important means for supporting massive connectivity. Dynamic grant-free transmission naturally supports multi-terminal multiplexing. For example, in a CG, the network device may configure, for a plurality of terminals by using higher layer signaling, a same time-frequency resource and orthogonal or quasi-orthogonal reference signals, for example, demodulation reference signals. In this way, when the plurality of terminal devices send data by using the same time-frequency resource, the network device may perform multi-terminal detection and data receiving by using the DMRS. Currently, in the uplink transmission based on the dynamic grant, a multi-user multiple-input multiple-output (multi-user multiple-input multiple-output, MU-MIMO) technology is further needed for implementation. However, the technology greatly depends on accurate obtaining of uplink channel information of the terminal device by the network device, and overheads are high. For example, the network device needs to deliver a channel state information reference signal (channel state information RS, CSI-RS) for the terminal device to measure and report channel information, or the terminal device needs to send a sounding reference signal SRS (sounding RS). In addition, pairing between terminal devices is complex. Therefore, the MU-MIMO technology is mainly used to increase an uplink throughput, but does not significantly increase a quantity of connections.

In addition, a synchronization signal/physical broadcast channel block (synchronization signal/physical broadcast channel block, SS/PBCH block) is further introduced in 5G NR. In this application, the SS/PBCH block may also be referred to as a synchronization signal block (synchronization signal block, SSB). The SSB may include three parts: a primary synchronization signal (primary synchronization signal, PSS), a secondary synchronization signal (secondary synchronization signal, SSS), and a master information block (master information block, MIB).

The network device sends a plurality of SSBs in a scanning manner in one periodicity, and different SSBs correspond to different spatial directions (for example, correspond to different beams). Therefore, a beam indication may also be implemented by using the SSB, or the SSB may be used as beam information. For example, FIG. 7 is a diagram of a relationship between a beam and a spatial direction according to this application. An SSB-1 and an SSB-2 respectively cover different areas, and the different areas may include different terminal devices. A quantity of SSBs may be configured by the network device for the terminal device by using a system message. Three quantities of SSBs: 4, 8, and 64 are supported in NR. Generally, a higher frequency indicates a larger quantity of SSBs and narrower beams for sending the SSBs.

The terminal device may measure a reference signal received power (reference signal received power, RSRP) of an SSB sent by the network device. When an RSRP measurement result of an SSB is greater than or equal to a preset threshold, the terminal device may select an access channel occasion (RACH occasion, RO) or a preamble to which the SSB is mapped, to perform an RA process, where one PRACH time-frequency resource may be referred to as one physical random access channel occasion. Therefore, there is a mapping relationship between an SSB and an RO or a preamble, and the mapping relationship may be one-to-many, one-to-one, or many-to-one. When performing 2-step RA or 4-step RA, the terminal device may notify the network device of the selected SSB in an implicit manner by using the selected RO or preamble. In this way, when sending a response message (the MsgB or the Msg2), the network device may send the response message in a spatial direction that is the same as that of the SSB to which the RO or the preamble selected by the terminal device is mapped. When receiving the response message, the terminal device also assumes that a quasi co-location (quasi co-location, QCL) feature is the same as that of the SSB to which the selected RO or preamble is mapped, so that the terminal device can implicitly indicate the SSB to the network device. The QCL feature may also be referred to as a QCL relationship. The QCL relationship means that two reference signals have some same spatial parameters. The SSB is implicitly indicated through RA, so that the network device can preliminarily determine a location of the terminal device, to perform more accurate beam management. The terminal device measures an SSB sent by the network device. When a measurement result of an SSB exceeds a preset threshold, the terminal device may select an RO or a preamble to which the SSB is mapped, to perform the RA process. Similar to RA, there may also be a mapping relationship between an SSB and a grant-free transmission resource in GF transmission. For example, there is a mapping relationship between an SSB and a time-frequency resource (transmission occasion, TO) or a DMRS. The relationship may also be one-to-many, one-to-one, or many-to-one.

Based on the foregoing descriptions of the small data transmission and the descriptions of an SSB configuration manner, in current GF transmission, the network device configures, for the terminal device by using a terminal device-specific RRC message, a grant-free resource used for direct small data transmission in an inactive state, and the grant-free resource includes a periodic time-frequency resource, a DMRS resource, and a transmission parameter such as an MCS. When the terminal device has an uplink data packet transmission requirement, the terminal device sends data by using the configured time-frequency resource. When the time-frequency resource is shared by a plurality of terminal devices, the network device may distinguish between the terminals by using DMRS resources such as DMRS ports or DMRS sequences. For example, different terminal devices use different DMRS ports or sequences.

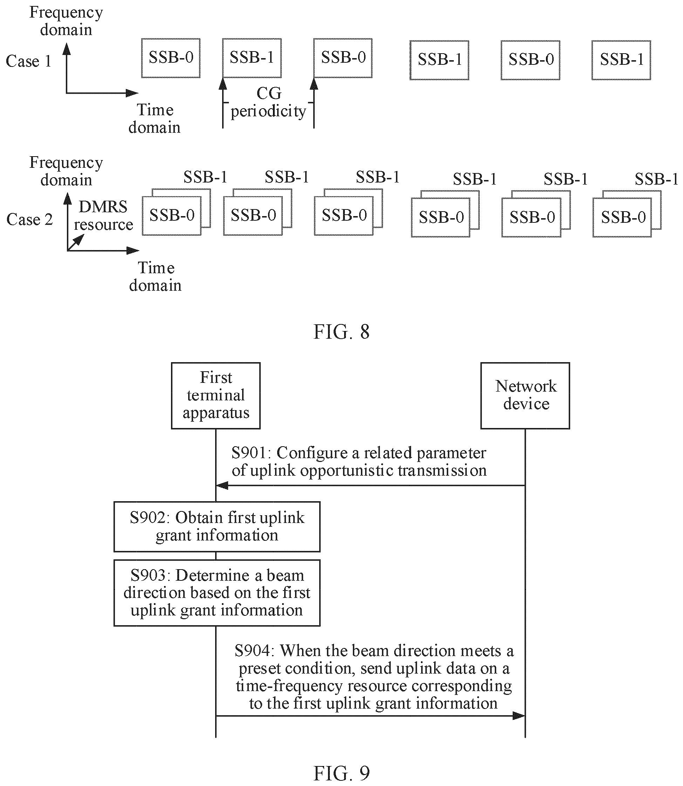

In addition, when configuring the time-frequency resource and the DMRS resource for the terminal device, the network device associates the configured resource with a beam such as an SSB. In this way, the terminal device selects, based on a beam measurement result, a time-frequency resource or a DMRS resource associated with a beam to send data, to implement a beam indication, and the network device receives, on the associated time-frequency resource by using a beam direction and by using the associated DMRS, the data sent by the terminal. For example, a method for associating the beam manner with the grant-free time-frequency resource and the DMRS resource is as follows: N (N≥1) SSBs are mapped to a plurality of combinations of time-frequency resources and DMRSs in a sequence of the DMRS resource (port or sequence) and then the time-frequency resource. For example, when N=2, two different SSBs may be mapped to different time-frequency resources (as shown in a case 1 in FIG. 8) or different DMRS resources on a same time-frequency resource (as shown in a case 2 in FIG. 8).

To consider transmission of all terminals whose service types support GF transmission in a cell, the network device needs to configure a corresponding SSB for each terminal. However, because the terminals may be completely scattered in the cell, it means that the network device needs to configure associated time-frequency resources and DMRS resources for all or most beam directions (such as SSBs). As a result, time-frequency resources mapped to a same beam direction have a large time interval. Consequently, a quantity of terminal devices that perform multiplex transmission within specific time is limited, and it is difficult to meet a terminal multiplex transmission requirement brought by an increasing quantity of terminals. In addition, in a highfrequency scenario, a beam is narrower, and there are more beam directions. In addition, due to a limited quantity of receive and transmit channels, the network device can simultaneously serve a limited quantity of beam directions, and a quantity of terminal devices that can perform multiplex transmission is further limited.

In addition, to improve a multiplex transmission capability for uplink data transmission, a terminal device may further send uplink data to a network device by using a data transmission method based on opportunistic multiple access (opportunistic multiple access, OpMA) or a data transmission method based on affiliated multiple access (affiliated multiple access, AMA). The method may also be referred to as opportunity-based multiple access (opportunity-based multiple access, OBMA) transmission. In uplink opportunistic transmission, the terminal may determine a beam direction based on received uplink grant information, and when the beam direction meets a preset condition, the terminal sends the uplink data to the network device by using a time-frequency resource corresponding to the uplink grant information. The time-frequency resource corresponding to the uplink grant information is used by a primary terminal to send the uplink data. In other words, the time-frequency resource is allocated to the primary terminal.

In the following, an example in which a first terminal apparatus, a second terminal apparatus, and the network device are execution bodies is used for description. The first terminal apparatus may be a first terminal device or a component in the first terminal device, and the second terminal apparatus may be a second terminal device or a component in the second terminal device. Optionally, the first terminal device and the second terminal device are different terminal devices. For example, optionally, the first terminal device and the second terminal device are different terminals in a coverage area of a same beam. In this application, the second terminal device may be used as a primary terminal (or a primary terminal), in other words, a time-frequency resource corresponding to first uplink grant information is originally allocated by the network device to the second terminal device. The first terminal device may be used as a secondary terminal in this application. In some conditions, the secondary terminal in this application may perform uplink data transmission by using the time-frequency resource allocated by the network device to the primary terminal. Alternatively, both the first terminal device and the second terminal device are used as secondary terminals, or the second terminal device is one or more secondary terminals including the first terminal device. In this case, there may be no primary terminal, in other words, there is no need to distinguish between the primary terminal and the secondary terminal. The following describes a procedure of the method with reference to FIG. 9.

FIG. 9 is a schematic flowchart of an uplink opportunistic transmission method according to this application. The method may include the following steps.

S901: The network device configures a related parameter of uplink opportunistic transmission for the first terminal apparatus, where the parameter is used by the first terminal apparatus to perform uplink transmission.

S902: The first terminal apparatus obtains the first uplink grant information.

The first uplink grant information may be from the network device, or the first uplink grant information is sent by the network device to the first terminal apparatus, and is used to schedule uplink data transmission of the second terminal apparatus.

S903: The first terminal apparatus determines a beam direction based on the first uplink grant information.

S904: When the beam direction meets a preset condition, the first terminal apparatus sends uplink data to the network device by using the time-frequency resource corresponding to the first uplink grant information.

Based on the procedure shown in FIG. 9, the first terminal apparatus continuously monitors the first uplink grant information, and determines, based on the first uplink grant information, the time-frequency resource used for data transmission. When the secondary terminal fails to obtain a valid dynamic grant through monitoring, the secondary terminal performs monitoring for a long time. As a result, power consumption of the terminal device is high, data transmission reliability is poor, and a delay is high.

To improve data transmission reliability and reduce a delay, embodiments of this application provide a data transmission method. The method may be implemented by a network device and a terminal apparatus. For example, the network device may include the network device 101 shown in FIG. 1, and the terminal apparatus may include the terminal device 102 shown in FIG. 1. It should be understood that a step performed by the terminal apparatus in the method may alternatively be performed by a component (such as a chip, a module, or a circuit) in the terminal apparatus, and/or a step performed by the network device in the method may alternatively be performed by a component (such as a chip, a module, or a circuit) in the network device. The terminal apparatus may include a first terminal apparatus and a second terminal apparatus. For the first terminal apparatus and the second terminal apparatus, refer to the foregoing related descriptions. Details are not described herein again.

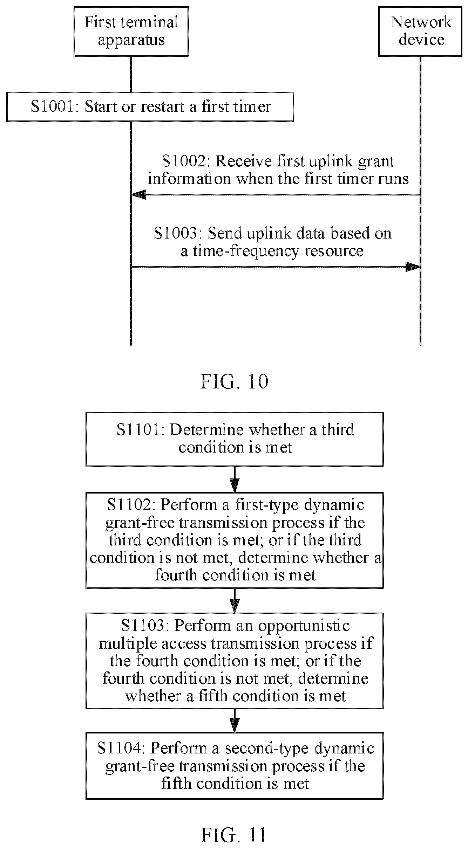

FIG. 10 is a schematic flowchart of a data transmission method according to this application. The method may include steps shown in S1001 to S1003. The following separately describes the steps.

S1001: The first terminal apparatus starts or restarts a first timer.

The first timer includes an opportunistic multiple access timer (opma-Timer). A length of the first timer may be determined by the first terminal apparatus, or may be agreed on by the first terminal apparatus and the network device in a protocol, or may be configured by the network device for the first terminal apparatus. This is not limited in this embodiment of this application.

Specifically, the first terminal apparatus starts or restarts the first timer when a first condition is met. The first condition includes at least one of the following: when/after the first terminal apparatus initiates an opportunistic multiple access transmission process; when/after the first terminal apparatus receives first uplink grant information; when/after the first terminal apparatus determines that first uplink grant information is a valid grant; when/after the first terminal apparatus receives second uplink grant information, where the second uplink grant information is used to grant data transmission of the first terminal apparatus, or is used to grant data transmission of a group of terminal apparatuses including the first terminal apparatus; when/after the first terminal apparatus sends uplink data; when/after the first terminal apparatus completes a random access process; or when/after an opportunistic multiple access response monitoring timer and/or an opportunistic multiple access autonomous retransmission timer in the first terminal apparatus expire/expires. The first terminal apparatus starts the first timer when/after the first condition that the first terminal apparatus initiates the opportunistic multiple access transmission process is met. The first terminal apparatus restarts the first timer when at least one of the following in the first condition is met: when/after the first terminal apparatus receives the first uplink grant information; when/after the first terminal apparatus determines that the first uplink grant information is a valid grant; when/after the first terminal apparatus receives the second uplink grant information, where the second uplink grant information is used to grant the data transmission of the first terminal apparatus, or is used to grant the data transmission of the group of terminal apparatuses including the first terminal apparatus; when/after the first terminal apparatus sends the uplink data; when/after the first terminal apparatus completes the random access process; or when/after the opportunistic multiple access response monitoring timer and/or the opportunistic multiple access autonomous retransmission timer in the first terminal apparatus expire/expires. **In** the following embodiments, unless otherwise specified, "initiate (initiate)", "trigger (trigger)", "perform (perform)", and "initiation (initiation)" may be used interchangeably. For example, that when/after the first terminal apparatus initiates the opportunistic multiple access transmission process may be understood as that the first terminal apparatus triggers the opportunistic multiple access transmission process. **In** this embodiment of this application, "when" may be understood as performing an operation at a moment, and "after" may be understood as performing an operation at an interval of a time period from the moment.

That the first terminal apparatus initiates the opportunistic multiple access transmission process may include one of the following: The first terminal apparatus autonomously initiates the opportunistic multiple access transmission process; the first terminal apparatus initiates the opportunistic multiple access transmission process after sending first indication information to the network device, where the first indication information is used to notify the network device that the first terminal apparatus is to initiate the opportunistic multiple access transmission process, or is used by the first terminal apparatus to request to initiate the opportunistic multiple access transmission process; or the first terminal apparatus initiates the opportunistic multiple access transmission process after receiving second indication information from the network device, where the second indication information indicates the first terminal apparatus to initiate the opportunistic multiple access transmission process. The first terminal apparatus autonomously initiates the opportunistic multiple access transmission process. In an example, an upper layer (upper layer), for example, an application layer, of the first terminal apparatus initiates the opportunistic multiple access transmission process. In another example, a MAC entity of the first terminal apparatus initiates the opportunistic multiple access transmission process. A time-frequency resource used by the first terminal apparatus to send the first indication information to the network device may be configured by the network device for the first terminal apparatus. Optionally, the first terminal apparatus may start the first timer on a 1^{st} symbol/last symbol or after the 1^{st} symbol/last symbol of a time domain resource in the time-frequency resource used to send the first indication information. It should be noted that, when the first terminal apparatus sends the first indication information to the network device, where the first indication information is used by the first terminal apparatus to request to initiate the opportunistic multiple access transmission process, the first terminal apparatus needs to receive a response, namely, the second indication information, from the network device, and correspondingly, the first terminal apparatus may initiate the opportunistic access transmission process after receiving the second indication information. When the first terminal apparatus sends the first indication information to the network device, where the first indication information is used to notify the network device that the first terminal apparatus is to initiate the opportunistic multiple access transmission process, the first terminal apparatus does not need to receive a response from the network device, and correspondingly, the first terminal apparatus may initiate the opportunistic multiple access transmission process after sending the first indication information.

It should be noted that, that the first terminal apparatus receives the first uplink grant information may be understood as that the first terminal apparatus obtains the first uplink grant information through monitoring.

It should be noted that, that when/after the first terminal apparatus determines that the first uplink grant information is a valid grant may be understood as that when/after the first terminal apparatus determines that the first uplink grant information that is obtained through monitoring or received is a valid grant. The first terminal apparatus may determine, in, but not limited to, the following two manners, whether the first uplink grant information is a valid grant.

Manner 1: The first terminal apparatus determines a beam direction based on the first uplink grant information, and determines, when the beam direction meets a preset condition, that the first uplink grant information is a valid grant. Details are as follows.

That the first terminal apparatus determines the beam direction based on the first uplink grant information may be understood as follows. For example, the first uplink grant information may include beam indication information indicating the beam direction. For example, the beam indication information includes indication information of a reference signal associated with the beam direction or a beam direction identifier. Correspondingly, the first terminal apparatus may determine the beam direction based on the beam indication information. For another example, at least one of an RNTI, a CORESET, search space, or a signaling format used to receive the first uplink grant information may correspond to the beam direction. Correspondingly, the first terminal apparatus may determine the beam direction based on the at least one of the RNTI, the CORESET, the search space, or the signaling format used to receive the first uplink grant information. For example, after receiving the first uplink grant information based on an RNTI #1, the first terminal apparatus may determine the beam direction corresponding to the first uplink grant information based on the RNTI and a third correspondence. The third correspondence may indicate a correspondence between the beam direction (or the indication information of the reference signal associated with the beam direction) and the at least one of the RNTI, the CORESET, the search space, or the signaling format. For example, when the third correspondence indicates that the RNTI #1 corresponds to an SSB #1, the first terminal apparatus may determine that the beam direction is a beam direction associated with the SSB #1.

When the beam direction does not meet the preset condition, the first uplink grant information is determined as an invalid grant, and correspondingly, the first terminal apparatus may not send (or ignore sending) the uplink data on the time-frequency resource corresponding to the first uplink grant information. Alternatively, when the beam direction does not meet the preset condition, the first uplink grant information is determined as an invalid grant, and correspondingly, the first terminal apparatus may send the uplink data on a time-frequency resource other than the time-frequency resource corresponding to the first uplink grant information, to avoid a transmission failure and interference caused to transmission of the second terminal apparatus.

The preset condition may be indicated by the network device by using an RRC message, a MAC CE, or DCI, or the preset condition may be predefined in a protocol or preconfigured in the first terminal apparatus.

For example, the preset condition includes at least one of a condition 1 and a condition 2. The condition 1 is that a signal measurement value corresponding to the beam direction meets a threshold condition. The condition 2 is that a beam direction configured by the network device for the first terminal apparatus includes the beam direction.

The following separately describes the condition 1 and the condition 2.

In the condition 1, the first terminal apparatus may determine, based on a measurement result of the beam direction, whether the beam direction needs to meet the preset condition. For example, when the reference signal can represent the beam direction, the first terminal apparatus determines, based on a measurement value of signal quality of the reference signal corresponding to the beam direction and the threshold condition (or a signal quality threshold), whether the beam direction meets the preset condition. The signal quality herein includes but is not limited to measurement of an RSRP of the reference signal, reference signal received quality (reference signal received quality, RSRQ), a signal to interference plus noise ratio (signal to interference plus noise ratio, SINR), a received signal strength indicator (received signal strength indicator, RSSI), a path loss (path loss, PL), an angle of arrival (angle of arrival, AoA) of the signal, and a time difference of arrival (time difference of arrival, TDOA). For example, when the RSRP of the reference signal exceeds a preset RSRP threshold, the first terminal apparatus determines that the beam direction meets the preset condition.

In the condition 2, if the beam direction is the beam direction configured by the network device for opportunistic transmission of the first terminal apparatus, or the beam direction is included in the beam direction configured by the network device for the opportunistic transmission of the first terminal apparatus, the first terminal apparatus may determine that the beam direction meets the preset condition.

It should be understood that the condition 1 and the condition 2 are exemplary conditions. During actual use, one of the condition 1 and the condition 2 may be used as the preset condition. To be specific, when determining that one of the condition 1 and the condition 2 is met, the first terminal apparatus determines that the preset condition is met. Alternatively, a combination of the condition 1 and the condition 2 may be used as the preset condition. To be specific, when determining that the condition 1 and the condition 2 are met, the first terminal apparatus determines that the preset condition is met.

Manner 2: The first uplink grant information may include indication information indicating whether the first terminal apparatus (or the secondary terminal) is allowed to perform uplink transmission by using the first uplink grant information (or the time-frequency resource). When the first uplink grant information indicates indication information indicating that the first terminal apparatus (or the secondary terminal) is not allowed to perform uplink transmission by using the first uplink grant information (or the time-frequency resource), the first uplink grant information is determined as an invalid grant. When the first uplink grant information indicates indication information indicating that the first terminal apparatus (or the secondary terminal) is allowed to perform uplink transmission by using the first uplink grant information (or the time-frequency resource), the first uplink grant information is determined as the valid grant. Details are as follows.

The indication information indicating whether the first terminal apparatus (or the secondary terminal) is allowed to perform uplink transmission by using the first uplink grant information (or the time-frequency resource) may include specific bit information in the first uplink grant information. For example, when a value of a specific bit of the first uplink grant information is "0", it indicates the indication information indicating that the first terminal apparatus (or the secondary terminal) is not allowed to perform uplink transmission by using the first uplink grant information (or the time-frequency resource), and correspondingly, the first terminal apparatus determines that the first uplink grant information is the invalid grant. When a value of a specific bit is "1", it indicates the indication information indicating that the first terminal apparatus (or the secondary terminal) is allowed to perform uplink transmission by using the first uplink grant information (or the time-frequency resource), and correspondingly, the first terminal apparatus determines that the first uplink grant information is a valid grant. For another example, when a value of a specific bit of the first uplink grant information is "0", it indicates the indication information indicating that the first terminal apparatus (or the secondary terminal) is allowed to perform uplink transmission by using the first uplink grant information (or the time-frequency resource), and correspondingly, the first terminal apparatus determines that the first uplink grant information is a valid grant. When a value of a specific bit is "1", it indicates the indication information indicating that the first terminal apparatus (or the secondary terminal) is not allowed to perform uplink transmission by using the first uplink grant information (or the time-frequency resource), and correspondingly, the first terminal apparatus determines that the first uplink grant information is the invalid grant. It may be understood that, in this application, there is no specific requirement on a name of the indication information indicating that the first terminal apparatus (or the secondary terminal) is allowed to perform uplink transmission by using the first uplink grant information (or the time-frequency resource). The indication information may alternatively have another name, for example, indication information indicating whether the secondary terminal is allowed to perform transmission, or information indicating whether only the primary terminal performs transmission.

The first terminal apparatus starts the first timer when/after receiving the second uplink grant information, where the second uplink grant information is used to grant the data transmission of the first terminal apparatus, or is used to grant the data transmission of the group of terminal apparatuses including the first terminal apparatus. That the second uplink grant information is used to grant the data transmission of the first terminal apparatus may be, for example, that DCI used to send the second uplink grant information is scrambled by using a radio network temporary identifier RNTI dedicated to the first terminal apparatus, for example, a cell-radio network temporary identifier (cell-radio network temporary identifier, C-RNTI). The C-RNTI dedicated to the first terminal apparatus is configured by the network device for the first terminal apparatus. That the second uplink grant information is used to grant the data transmission of the group of terminal apparatuses including the first terminal apparatus may be, for example, that DCI used to send the second uplink grant information is scrambled by using a group RNTI. The group RNTI is shared by the group of terminal apparatuses including the first terminal apparatus, and the group RNTI is configured by the network device for the group of terminal apparatuses including the first terminal apparatus. The second uplink grant information may be directly sent by the network device to the first terminal apparatus, or may be sent by the second terminal apparatus to the first terminal apparatus.

That the first terminal apparatus starts the first timer when/after sending the uplink data may be understood as that the first terminal apparatus starts the first timer on a 1^{st} symbol/last symbol or after the 1^{st} symbol/last symbol of a time domain resource in the time-frequency resource used to send the uplink data. For example, the first terminal apparatus starts the first timer on a 1^{st} symbol/last symbol or after the 1^{st} symbol/last symbol of a PUSCH time domain resource that is used for opportunistic multiple access and that is determined based on the first uplink grant information.

The first terminal apparatus may start the first timer when/after completing the random access process. That the first terminal apparatus completes the random access process may mean that the first terminal apparatus receives a contention resolution (contention resolution, CR) message sent by the network device, where the contention resolution message is carried in a MsgB of 2-step RA or a Msg4 of 4-step RA.

The first timer is started when/after the opportunistic multiple access response monitoring timer and/or the opportunistic multiple access autonomous retransmission timer in the first terminal apparatus expire/expires. The opportunistic multiple access response monitoring timer may be referred to as an OpMA response monitoring timer for short, and the opportunistic multiple access autonomous retransmission timer may be referred to as an OpMA autonomous retransmission timer for short. The OpMA response monitoring timer is a timer started or restarted after the first terminal apparatus sends the uplink data based on the time-frequency resource corresponding to the first uplink grant information. For example, the first terminal apparatus starts the OpMA response monitoring timer after a last symbol of a PUSCH for sending opportunistic multiple access or on a 1^{st} symbol of an earliest control resource set used to receive a PDCCH, and the first terminal apparatus monitors or receives, from the network device, a response message for the sent uplink data within a time period from a moment at which the OpMA response monitoring timer is started to an end moment of predefined duration set by the OpMA response monitoring timer. During running of the OpMA response monitoring timer, after the first terminal apparatus obtains, through monitoring, or receives the response message from the network device, the first terminal apparatus terminates the OpMA response monitoring timer. That the first terminal apparatus terminates the OpMA response monitoring timer may be understood as that the first terminal apparatus stops the OpMA response monitoring timer. Optionally, when the OpMA response monitoring timer expires and the first terminal apparatus receives no a response message from the network device, the first terminal apparatus determines that the sent uplink data is correctly received by the network device. The OpMA autonomous retransmission timer is a timer started or restarted after the first terminal apparatus sends the uplink data based on the time-frequency resource corresponding to the first uplink grant information. For example, the first terminal apparatus starts the OpMA autonomous retransmission timer after a last symbol of a PUSCH for sending opportunistic multiple access or on a 1^{st} symbol of an earliest control resource set used to receive a PDCCH. If still no response message corresponding to the uplink data is received from the network device when the OpMA autonomous retransmission timer expires, the first uplink grant information obtained, through monitoring, or received by the first terminal apparatus is used for autonomous retransmission of the uplink data. During running of the OpMA autonomous retransmission timer, after the first terminal apparatus obtains, through monitoring, or receives, from the network device, the response message for the uplink data, the first terminal apparatus terminates the OpMA autonomous retransmission timer.

Optionally, before the first terminal apparatus performs step S1001, the first terminal apparatus determines to choose to perform the opportunistic multiple access process.

It should be noted that, before the first terminal apparatus determines to choose to perform the opportunistic multiple access process, the first terminal apparatus determines whether a third condition is met; and the first terminal apparatus performs a first-type dynamic grant-free transmission process if the third condition is met; or the first terminal apparatus performs the opportunistic multiple access process if the third condition is not met. The process may exist independently as an independent embodiment. This is not limited in this embodiment of this application.

The third condition includes one or more of the following: The first terminal apparatus is synchronized with the network device; channel quality of the first terminal apparatus meets a first preset value; a measurement result of at least one of beam directions configured by the network device for dynamic grant-free transmission of the first terminal apparatus meets a preset condition; or a data buffer size of the first terminal apparatus meets a second preset value.

That the first terminal apparatus is synchronized with the network device may be, for example, that a time alignment timer (Time Alignment Timer) in the first terminal apparatus is running, in other words, the time alignment timer is started and duration set by the time alignment timer does not exceed. That the channel quality of the first terminal apparatus meets the first preset value may be that the signal quality herein includes but is not limited to measurement of an RSRP of a reference signal, RSRQ, a SINR, an RSSI, a PL, an AoA, and a TDOA. For example, when the RSRP of the reference signal exceeds a preset RSRP threshold, the first terminal apparatus determines that the third condition is met. The measurement result of at least one of the beam directions configured by the network device for the dynamic grant-free transmission of the first terminal apparatus meets the preset condition. For example, when the reference signal can represent the beam direction, the first terminal apparatus determines, based on a measurement value of signal quality of the reference signal corresponding to the beam direction and a threshold condition (or a signal quality threshold), whether the beam direction meets the preset condition. The signal quality herein includes but is not limited to measurement of an RSRP, RSRQ, a SINR, an RSSI, a PL, an AoA, and a TDOA. For example, when the RSRP of the reference signal exceeds a preset RSRP threshold, the first terminal apparatus determines that the measurement result of at least one of the configured beam directions meets the preset condition, and correspondingly, the first terminal apparatus determines that the third condition is met. That the data buffer size of the first terminal apparatus meets the second preset value may be, for example, that the data buffer size of the first terminal apparatus is not greater than a preset threshold, and the first terminal apparatus determines that the third condition is met.

S 1002: The first terminal apparatus receives the first uplink grant information when the first timer runs.

That the first timer runs may be understood as that the first timer does not expire, or that a time length of the first timer does not exceed after the first timer is started.

The time-frequency resource corresponding to the first uplink grant information is used for uplink transmission of the second terminal apparatus. In other words, the first uplink grant information may be used by the second terminal apparatus to send uplink data on the corresponding time-frequency resource by using a specified parameter (for example, an MCS) and the like. In other words, the time-frequency resource corresponding to the first uplink grant information may be a time-frequency resource allocated by the network device to the primary terminal (for example, the second terminal apparatus). When having an uplink data transmission requirement, the secondary terminal (for example, the first terminal apparatus) performs data transmission by using a time-frequency resource allocated by a base station to the primary terminal (for example, the second terminal apparatus), to be specific, performs uplink opportunistic (opportunistic) transmission, affiliated (affiliated) transmission, or uplink transmission that is based on the opportunistic multiple access. Alternatively, both the first terminal apparatus and the second terminal apparatus are used as secondary terminals. Therefore, the time-frequency resource corresponding to the first uplink grant information may be a resource allocated by the network device to a group (or at least one) of secondary terminals.

In this application, the time-frequency resource corresponding to the first uplink grant information may be a time-frequency resource indicated by the first uplink grant information. The time-frequency resource may be further used by the first terminal apparatus to send the uplink data.

The following describes a manner in which the first terminal apparatus determines the time-frequency resource based on the first uplink grant information.

In an example, the first uplink grant information may include time-frequency resource information of the time-frequency resource. In other words, the time-frequency resource corresponding to the first uplink grant information is indicated by the time-frequency resource information included in the first uplink grant information. For example, the first uplink grant information includes time domain location information and frequency domain location information of the time-frequency resource.

In another example, the network device may configure a transmission resource set for the terminal by using an RRC message, a MAC CE, or DCI. The first uplink grant information may carry indication information indicating a transmission resource from the transmission resource set. The transmission resource may include a time-frequency resource (to be specific, a time domain resource and a frequency domain resource). In addition, the transmission resource may further include a space domain resource, a code domain resource (such as a DMRS), a multiple access signature (signature), or the like. The time-frequency resource determined based on the indication information in the first uplink grant information is the time-frequency resource corresponding to the first uplink grant information. For example, the first uplink grant information may include an index of a time-frequency resource in the resource set.

In another example, the time-frequency resource indicated by the first uplink grant information may be a time-frequency resource corresponding to at least one of an RNTI, a CORESET, search space, or a signaling format used to receive the first uplink grant information. In other words, the time-frequency resource indicated by the first uplink grant information is implicitly indicated by using the at least one of the RNTI, the CORESET, the search space, or the signaling format used to receive the first uplink grant information. For example, the at least one of the RNTI, the CORESET, the search space, or the signaling format used to receive the first uplink grant information corresponds to a transmission resource. Optionally, the first terminal apparatus may receive a first correspondence from the network device, where the first correspondence may include a correspondence between the transmission resource and the at least one of the RNTI, the CORESET, the search space, or the signaling format used to receive the first uplink grant information. Alternatively, the first correspondence may be stored in the first terminal apparatus. For example, the correspondence may be preconfigured by the network device by using signaling, or may be defined in a protocol, or may be preconfigured in the first terminal apparatus. When receiving the first uplink grant information based on the at least one of the RNTI, the CORESET, the search space, or the signaling format, the first terminal apparatus may further determine the time-frequency resource corresponding to the first uplink grant information based on the first correspondence and the at least one of the RNTI, the CORESET, the search space, or the signaling format of the first uplink grant information.

It may be understood that, for the network device that sends the first uplink grant information, the foregoing RNTI, CORESET, search space, or signaling format used to receive the first uplink grant information may be referred to as an RNTI, a CORESET, search space, or a signaling format used to send the first uplink grant information.

Optionally, the at least one of the RNTI, the CORESET, the search space, or the signaling format used to receive the first uplink grant information may be allocated to one or more terminals (including the first terminal apparatus and/or the second terminal apparatus).

For example, the first correspondence includes a correspondence between an RNTI-1 and a time-frequency resource 1. When the first terminal apparatus receives the first uplink grant information based on the RNTI-1, the time-frequency resource corresponding to the first uplink grant information is the time-frequency resource 1.

It should be understood that the time-frequency resource corresponding to the first uplink grant information may be a time-frequency resource allocated by the network device to the second terminal apparatus. Therefore, the second terminal apparatus may perform uplink transmission by using the time-frequency resource.

It should be noted that the first uplink grant information may be from the network device, or may be from the second terminal apparatus. Specifically, the following two possible implementations are included.
(1) In a first possible implementation, the first uplink grant information is dynamic grant information sent by the network device. For example, according to descriptions in this application, the second terminal apparatus may send a scheduling request to the network device through a PUCCH, or the second terminal apparatus may send a buffer state to the network device through the PUSCH, and then the network device may send the first uplink grant information, to schedule uplink data transmission of the second terminal apparatus. Optionally, the first uplink grant information may include the time-frequency resource used by the second terminal apparatus to perform uplink data transmission. Optionally, the first uplink grant information may be sent by the network device in a unicast, groupcast, or broadcast manner.

For example, the first uplink grant information may be a physical layer signal. For example, the first uplink grant information is DCI, and the first uplink grant information may be sent through the PDCCH. For another example, the first grant information may alternatively be a MAC layer signal, for example, a MAC control element (control element, CE). In this case, the first grant information may be delivered through, for example, a PDSCH. A difference between the DCI and the MAC control element lies in that the DCI is usually scrambled by using a specific RNTI before being sent. Therefore, the terminal can correctly receive the DCI sent by the base station to the terminal only after determining the RNTI. However, the MAC CE does not need to be scrambled by using a specific RNTI before being received.

If the first uplink grant information is the DCI, the RNTI used by the first terminal apparatus to receive the first uplink grant information may be preconfigured by the network device by using signaling. For example, the network device may configure the RNTI for the first terminal apparatus by using an RRC message, a MAC CE, or DCI. Optionally, the RNTI may be an RNTI, for example, a C-RNTI, configured by the network device for the second terminal apparatus. In this case, the first terminal apparatus and the second terminal apparatus share the RNTI.

Alternatively, the RNTI may be calculated by the first terminal apparatus based on a resource such as the time domain resource, the frequency domain resource, the code domain resource, or the multiple access signature. For example, the network device configures, for the first terminal apparatus, a transmission resource including the time domain resource, the frequency domain resource, the code domain resource, the multiple access signature, or the like, where the transmission resource is, for example, a grant-free transmission resource. The terminal may calculate the RNTI based on the resources, and receive, based on the RNTI, the first uplink grant information sent through the PDCCH. For example, a corresponding RNTI is set for the grant-free resource, or a corresponding parameter used to calculate the RNTI is set for the grant-free resource, and is used by the first terminal apparatus to calculate the RNTI.

It should be understood that, the first uplink grant information herein may be sent by the network device to the second terminal apparatus, and the network device may configure a transmission resource including any one or more of the time domain resource, the frequency domain resource, the code domain resource, the multiple access signature, or the like for at least one terminal apparatus (including the first terminal apparatus) in advance, where the transmission resource is, for example, a grant-free transmission resource. When sending dynamic grant information (for example, the time-frequency resource indicating the second terminal apparatus to perform uplink transmission) to the second terminal apparatus, the network device calculates an RNTI of the dynamic grant information based on the configured transmission resource, and sends the dynamic grant information based on the RNTI. If the first terminal apparatus has an uplink transmission requirement, the first terminal apparatus may also calculate the RNTI based on the configured transmission resource. If the first terminal apparatus successfully receives the dynamic grant information based on the RNTI, the dynamic grant information may be used as the first uplink grant information. If the first terminal apparatus does not successfully receive the dynamic grant information based on the RNTI, it indicates that there is no uplink grant information corresponding to the time-frequency resource.

The code domain resource herein may be a DMRS resource, for example, a DMRS port, a preamble resource, or a sequence resource. The sequence resource includes, for example, a ZC (Zadoff-Chu) sequence, a covered-ZC (covered-ZC) sequence, a pseudo-noise (pseudo-noise, PN) sequence, a longest linear feedback shift register (M) sequence, a Golden sequence, a Reed-Muller (Reed-Muller) sequence, a discrete Fourier transform (discrete Fourier transform, DFT) sequence, an inverse discrete Fourier transform (inverse discrete Fourier transform, IDFT) sequence, or a Hadamard (Hadamard) sequence.

The multiple access signature herein includes but is not limited to a codebook (codebook), a pattern, a sequence, and the like that can be used for, that can assist, or that can enhance multi-user detection or multi-data reception, for example, a spreading sequence (spreading sequence), a spreading pattern (spreading pattern), a resource mapping pattern (resource mapping pattern), or a resource hopping pattern (resource hopping pattern).

In the first implementation, the first uplink grant information may include explicit indication information of a transmission resource and/or a transmission parameter, or the first uplink grant information may include the transmission resource and/or the transmission parameter. The transmission resource and/or the transmission parameter may be used by the first terminal apparatus to send the uplink data. In this application, the transmission resource includes but is not limited to any one or more resources such as the time domain resource, the frequency domain resource, the code domain resource, or the multiple access signature resource. The transmission parameter in this application includes but is not limited to a parameter such as an MCS, a power control parameter, or a quantity of repeated transmission times. The first terminal apparatus may send the uplink data to the network device based on the transmission resource and/or the transmission parameter.

Specifically, the first uplink grant information may specifically include resource information of the transmission resource and/or the transmission parameter. Therefore, the first uplink grant information may directly indicate the transmission resource and/or the transmission parameter. Alternatively, the first uplink grant information may indicate a transmission resource from a transmission resource set, where the transmission resource set may be indicated by the network device by using an RRC message, a MAC CE, or DCI; and/or the first uplink grant information may indicate a transmission parameter from a transmission parameter set, where the transmission parameter set may be indicated by the network device by using an RRC message, a MAC CE, or DCI.

In addition, the first uplink grant information may implicitly indicate the transmission resource and/or the transmission parameter. For example, as described above, the at least one of the RNTI, the CORESET, the search space, or the signaling format used to receive the first uplink grant information may correspond to the transmission resource. Therefore, after the first terminal apparatus receives the first uplink grant information, the transmission resource corresponding to the at least one of the RNTI, the CORESET, the search space, or the signaling format may be used as the transmission resource used to send the uplink data.

Similarly, the at least one of the RNTI, the CORESET, the search space, or the signaling format used to receive the first uplink grant information may correspond to the transmission parameter, and the transmission parameter corresponding to the at least one of the RNTI, the CORESET, the search space, or the signaling format may be used as the transmission parameter used to send the uplink data.

Optionally, the first terminal apparatus may receive a second correspondence from the network device, where the second correspondence may include a correspondence between the transmission parameter and the at least one of the RNTI, the CORESET, the search space, or the signaling format used to receive the first uplink grant information. Alternatively, the second correspondence may be stored in the first terminal apparatus. For example, the correspondence may be preconfigured by the network device by using signaling, or may be defined in a protocol, or may be preconfigured in the first terminal apparatus. When receiving the first uplink grant information based on the at least one of the RNTI, the CORESET, the search space, or the signaling format, the first terminal apparatus may further determine the transmission parameter based on the second correspondence and the at least one of the RNTI, the CORESET, the search space, or the signaling format of the first uplink grant information.

In addition, optionally, in the first implementation, the first uplink grant information may be used by the first terminal apparatus to determine a beam direction corresponding to the first uplink grant information, where the first uplink grant information may include indication information of the beam direction, or the first uplink grant information may implicitly indicate the beam direction. The beam direction may be used by the first terminal apparatus to determine whether to send the uplink data on the time-frequency resource corresponding to the first uplink grant information. For details, refer to the foregoing descriptions. Details are not described herein. A beam herein may be a beam used by the network device for reception.

In an example, the first uplink grant information may include beam indication information (which may also be referred to as indication information of the beam direction), used to explicitly indicate the beam direction. For example, the beam indication information may include indication information of a reference signal associated with the beam direction or a beam direction identifier. The indication information of the reference signal associated with the beam direction includes, for example, an index of the reference signal representing the beam direction, for example, an SSB index or a CSI-RS index. The beam direction identifier may be, for example, an index or an identifier corresponding to the beam direction.

In another example, the first terminal apparatus may determine the beam direction based on the at least one of the RNTI, the CORESET, the search space, or the signaling format that is used to receive the first uplink grant information and that may correspond to the beam direction. For example, the at least one of the RNTI, the CORESET, the search space, or the signaling format used to receive the first uplink grant information may correspond to the beam direction. Therefore, after the first terminal apparatus receives the first uplink grant information, the beam direction corresponding to the at least one of the RNTI, the CORESET, the search space, or the signaling format may be used as the beam direction herein. In other words, the first uplink grant information may implicitly indicate the beam direction. Optionally, the first terminal apparatus may receive a third correspondence from the network device, where the third correspondence may include a correspondence between the beam direction and the at least one of the RNTI, the CORESET, the search space, or the signaling format used to receive the first uplink grant information. Alternatively, the third correspondence may be stored in the first terminal apparatus. For example, the correspondence may be preconfigured by the network device by using signaling, or may be defined in a protocol, or may be preconfigured in the first terminal apparatus. When receiving the first uplink grant information based on the at least one of the RNTI, the CORESET, the search space, or the signaling format, the first terminal apparatus may further determine the beam direction corresponding to the first uplink grant information based on the third correspondence and the at least one of the RNTI, the CORESET, the search space, or the signaling format of the first uplink grant information.

For example, the third correspondence includes a correspondence between an RNTI-1 and an SSB-1 (or an index of the SSB-1), and includes a correspondence between an RNTI-2 and an SSB-2 (or an index of the SSB-2). When the first terminal apparatus receives the first uplink grant information based on the RNTI-1, the first terminal apparatus may use a beam direction associated with the SSB-1 as the beam direction, or use the SSB-1 as the beam direction. When the first terminal apparatus receives the first uplink grant information based on the RNTI-2, the first terminal apparatus may use a beam direction associated with the SSB-2 as the beam direction, or use the SSB-2 as the beam direction.

(2) In a second possible implementation, the first uplink grant information may be from the second terminal apparatus. For example, the second terminal apparatus may send the first uplink grant information to the first terminal apparatus based on second uplink grant information from the network device.

The second terminal apparatus may send the first uplink grant information to the first terminal apparatus in a unicast (unicast), groupcast (groupcast), multicast (multicast), or broadcast (broadcast) manner through any communication link between terminals, for example, a D2D link, a sidelink (sidelink), or Bluetooth (Bluetooth). For example, the first uplink grant information may be carried on a physical sidelink control channel (physical sidelink control channel, PSCCH) or a physical sidelink shared channel (physical sidelink shared channel, PSSCH).

In the second possible implementation, according to descriptions in this application, optionally, the second terminal apparatus may send a scheduling request to the network device through a PUCCH, or the second terminal apparatus may send a buffer state to the network device through a PUSCH, and the second terminal apparatus may receive the second uplink grant information from the network device. The second terminal apparatus may determine the first uplink grant information based on the received second uplink grant information, and send the first uplink grant information to the first terminal apparatus. For example, the second terminal apparatus may determine a time-frequency resource based on the second uplink grant information, and include indication information of the time-frequency resource in the first uplink grant information.

The second terminal apparatus may determine, based on an explicit indication carried in the second uplink grant information, that the second uplink grant information is used by the second terminal apparatus to perform uplink data transmission. In other words, the second terminal apparatus may determine, based on the explicit indication carried in the second uplink grant information, that the second terminal apparatus is the primary terminal. In addition, in the second implementation, it is not excluded that the second terminal apparatus is the secondary terminal. For example, the first terminal apparatus and the second terminal apparatus are used as a group of secondary terminals, and the second terminal apparatus may be configured to forward the received uplink grant information to another secondary terminal (for example, including the first terminal apparatus).

In addition, in the second possible implementation, the first uplink grant information may further include a transmission resource (or indication information of the transmission resource) and/or a transmission parameter (or indication information of the transmission parameter) that are/is used by the first terminal apparatus to perform uplink transmission with the network device. Optionally, the second uplink grant information may include a transmission resource and/or a transmission parameter that are/is used by the second terminal apparatus to perform uplink transmission, and the transmission resource and/or the transmission parameter that are/is used by the first terminal apparatus to perform uplink transmission with the network device and that are/is in the first uplink grant information may be the same as the transmission resource and/or the transmission parameter that are/is used by the second terminal apparatus to perform uplink transmission and that are/is included in the second uplink grant information.

In a possible example, the first uplink grant information may include indication information of a transmission resource and/or a transmission parameter that are/is used and/or cannot be used by the first terminal apparatus to transmit the uplink data to the network device.

In the second possible implementation, the first uplink grant information may further include beam indication information. For example, the beam indication information may include indication information of a reference signal associated with a beam direction or a beam direction identifier. For details, refer to the descriptions of the beam indication information in the first implementation in this application. The beam direction may be indicated by the second uplink grant information, and the second uplink grant information may explicitly or implicitly indicate the beam direction. For an explicit indication manner and an implicit indication manner, refer to manners of explicitly and implicitly indicating the beam direction in the first implementation. Details are not described again.

It should be understood that in the implementations, in addition to the transmission resource and the transmission parameter, the first uplink grant information may further include other information used by the first terminal apparatus to perform uplink transmission. For example, the information includes an identifier of the primary terminal, an identifier of the secondary terminal, or indication information indicating whether the first terminal apparatus (or the secondary terminal) is allowed to perform uplink transmission by using the first uplink grant information (or the time-frequency resource).

The identifier of the secondary terminal may explicitly indicate the secondary terminal. An identifier of the first terminal apparatus and/or the identifier of the secondary terminal are/is, for example, a UE ID, or may include other information that can be used to identify a terminal type, for example, information such as a time-frequency resource or a DMRS resource or sequence corresponding to the terminal when the terminal can be identified by using the time-frequency resource or the DMRS resource or sequence. The terminal type in this application indicates that the terminal is the primary terminal or the secondary terminal. Similarly, the identifier of the primary terminal may explicitly indicate the primary terminal (for example, the second terminal apparatus). The identifier of the primary terminal may be a UE ID of the terminal, or may include other information that can be used to identify the terminal. In addition, the identifier of the secondary terminal and the identifier of the primary terminal may also be used as an identifier of a terminal allowed to send data. If an identifier of a terminal receiving the first uplink grant information is not included in the identifier of the terminal allowed to send the data, it indicates that the terminal is not allowed to send the uplink data by using the first uplink grant information.

Optionally, in this application, after receiving the first uplink grant information, the first terminal apparatus may determine, based on the first uplink grant information, that the first terminal apparatus is used as the secondary terminal. In addition, after receiving the first uplink grant information or the second uplink grant information, the second terminal apparatus may determine, based on the first uplink grant information or the second uplink grant information, that the second terminal apparatus is used as the primary terminal.

In this application, when a terminal receives uplink grant information (including the first uplink grant information and/or the second uplink grant information), and the uplink grant information indicates only the primary terminal (for example, carries the identifier of the primary terminal), if the terminal determines that the terminal is not the primary terminal, for example, the identifier of the primary terminal does not include an identifier of the terminal, in an implementation, the terminal determines that the terminal is the secondary terminal; or if the terminal determines that the identifier of the primary terminal includes an identifier of the terminal, the terminal determines that the terminal is the primary terminal. Similarly, when a terminal receives uplink grant information (including the first uplink grant information and/or the second uplink grant information), and the uplink grant information indicates only the secondary terminal (for example, carries the identifier of the secondary terminal), if the terminal determines that the terminal is not the secondary terminal, for example, the identifier of the secondary terminal does not include an identifier of the terminal, in an implementation, the terminal determines that the terminal is the primary terminal; or if the terminal determines that the identifier of the secondary terminal includes an identifier of the terminal, the terminal determines that the terminal is the secondary terminal.

In addition, it should be understood that at least one of an RNTI, a CORESET, search space, or a signaling format used to receive the uplink grant information (including the first uplink grant information and/or the second uplink grant information) may correspond to the primary terminal or the secondary terminal, so that the terminal type can be implicitly indicated by using the uplink grant information. In an optional example, there is a correspondence (which may be referred to as a fourth correspondence) between the terminal type (for example, including the primary terminal and the secondary terminal) and the at least one of the RNTI, the CORESET, the search space, or the signaling format used to receive the first uplink grant information. For example, the network device configures two RNTIs: an RNTI-1 and an RNTI-2 for a terminal, and the two RNTIs are respectively associated with two types: the primary terminal and the secondary terminal. When the terminal receives a dynamic grant instruction by using the RNTI-1, the terminal determines that the terminal is the primary terminal. When the terminal receives a dynamic grant instruction by using the RNTI-2, the terminal determines that the terminal is the secondary terminal.

The first uplink grant information includes the indication information indicating whether the first terminal apparatus (or the secondary terminal) is allowed to perform uplink transmission by using the first uplink grant information (or the time-frequency resource). For details, refer to the related descriptions in step S1001. Details are not described herein again.

Optionally, when the first uplink grant information includes the identifier of the first terminal apparatus, or includes the indication information indicating that the first terminal apparatus is allowed to perform uplink transmission by using the first uplink grant information (or the time-frequency resource), the first terminal apparatus may perform uplink data transmission based on the first uplink grant information. Otherwise, if the first uplink grant information does not include the identifier of the first terminal apparatus, or does not include the indication information indicating that the first terminal apparatus is allowed to perform uplink transmission by using the time-frequency resource, the first terminal apparatus does not perform uplink transmission based on the first uplink grant information (or the time-frequency resource). In other words, the first terminal apparatus ignores performing uplink transmission based on the first uplink grant information (or the time-frequency resource).

In a possible implementation, the method further includes: The first terminal apparatus initiates a dynamic grant-free transmission process or the random access process when the first timer expires.

It should be noted that, the first terminal apparatus further determines, based on an initial transmission situation of the first terminal apparatus when the first timer expires, to initiate the dynamic grant-free transmission process or the random access process.

The first terminal apparatus initiates the dynamic grant-free transmission process when the first timer expires and the first terminal apparatus does not perform initial transmission. Optionally, the first terminal apparatus initiates a second-type dynamic grant-free transmission process. Alternatively, the first terminal apparatus initiates the first-type dynamic grant-free transmission process when determining that a resource for first-type dynamic grant-free transmission is valid; otherwise, the first terminal apparatus initiates the second-type dynamic grant-free transmission process. For related descriptions of the first-type dynamic grant-free transmission process and the second-type dynamic grant-free transmission process, refer to the foregoing descriptions. Details are not described herein again.

The first terminal apparatus initiates the random access process when the first timer expires and the first terminal apparatus has performed initial transmission.

That the first terminal apparatus performs initial transmission may be understood as that the first terminal apparatus has sent a 1^{st} data packet after performing the opportunistic multiple access process, in other words, the first terminal device has sent the 1^{st} data packet based on the time-frequency resource when performing the opportunistic multiple access process. That the first terminal apparatus does not perform initial transmission may be understood as that the first terminal apparatus does not send a 1^{st} data packet after performing the opportunistic multiple access process.

In another possible implementation, the method further includes: The first terminal apparatus stops the first timer when a second condition is met.

It may be understood as that a process in which the first terminal apparatus stops the first timer occurs after the first timer is started and before the first timer expires. The second condition includes one or more of the following: when/after the first terminal apparatus terminates the opportunistic multiple access transmission process; when/after the first terminal apparatus receives third indication information from the network device, where the third indication information indicates that the opportunistic multiple access transmission process ends; when/after an RRC state of the first terminal apparatus changes; or when/after the time alignment timer (Time Alignment Timer) in the first terminal apparatus expires.

That the first terminal apparatus terminates the opportunistic multiple access transmission process may be understood as that the first terminal apparatus stops the opportunistic multiple access transmission process. The first terminal apparatus receives the third indication information from the network device, where the third indication information may be an RRC release message. That the RRC state of the first terminal apparatus changes is, for example, that the first terminal apparatus switches from an inactive state to an active state; or the first terminal apparatus switches from an inactive state to an idle state. The time alignment timer in the first terminal apparatus is used for synchronization between the first terminal apparatus and the network device. That the time alignment timer in the first terminal apparatus expires may be understood as that the time alignment timer is started and exceeds the duration set by the time alignment timer.

S1003: The first terminal apparatus sends the uplink data based on the time-frequency resource.

That the first terminal apparatus sends the uplink data based on the time-frequency resource may mean that the first terminal apparatus sends the uplink data by using a part or all of the time-frequency resource. The time-frequency resource is determined by the first terminal apparatus based on the first uplink grant information. For details, refer to the foregoing descriptions. Details are not described herein again.

It should be further understood that in S 1003, the first terminal apparatus may send the uplink data to the network device based on the transmission resource and/or the transmission parameter. Optionally, the transmission resource and/or the transmission parameter may be determined by the first terminal apparatus based on the first uplink grant information. For details, refer to the foregoing descriptions. For example, the first uplink grant information may specifically include transmission resource information and/or the transmission parameter. For another example, the first uplink grant information may alternatively indicate a transmission resource from a transmission resource set, and/or the first uplink grant information may indicate a transmission parameter from a transmission parameter set. For still another example, the first uplink grant information may implicitly indicate the transmission resource and/or the transmission parameter. Optionally, the transmission resource and/or the transmission parameter may be preconfigured by the network device for the first terminal apparatus by using signaling such as RRC, DCI, or a MAC CE.

A manner of configuring at least one of the first correspondence, the second correspondence, the third correspondence, and the fourth correspondence in this application is described herein by using examples.

In a possible example, the network device may send or indicate, to the terminal device, a correspondence between the at least one of the RNTI, the CORESET, the search space, or the signaling format and at least one of the transmission resource, the transmission parameter, the beam direction, and the terminal type. When the correspondence includes a correspondence between the transmission resource and the at least one of the RNTI, the CORESET, the search space, or the signaling format, the correspondence includes the first correspondence. When the correspondence includes a correspondence between the transmission parameter and the at least one of the RNTI, the CORESET, the search space, or the signaling format, the correspondence includes the second correspondence. When the correspondence includes a correspondence between the beam direction and the at least one of the RNTI, the CORESET, the search space, or the signaling format, the correspondence includes the third correspondence. When the correspondence includes a correspondence between the terminal type and the at least one of the RNTI, the CORESET, the search space, or the signaling format, the correspondence includes the fourth correspondence.

For example, when the correspondence includes the correspondence between the transmission resource and/or the transmission parameter and the at least one of the RNTI, the CORESET, the search space, or the signaling format, the first terminal apparatus may determine the transmission resource based on the correspondence and the at least one of the RNTI, the CORESET, the search space, or the signaling format used to receive the first uplink grant information, and send the uplink data by using the transmission resource and/or the transmission parameter. Correspondingly, the network device may receive the uplink data from the first terminal apparatus based on the transmission resource and/or the transmission parameter.

For another example, when the correspondence includes the correspondence between the beam direction and the at least one of the RNTI, the CORESET, the search space, or the signaling format, the first terminal apparatus may determine the beam direction based on the correspondence and the at least one of the RNTI, the CORESET, the search space, or the signaling format used to receive the first uplink grant information, and determine, based on the beam direction, whether to send the uplink data on the time-frequency resource corresponding to the first uplink grant information. For details, refer to the descriptions in S803.

For another example, when the correspondence includes the correspondence between the terminal type and the at least one of the RNTI, the CORESET, the search space, or the signaling format, the first terminal device may determine the terminal type based on the correspondence and the at least one of the RNTI, the CORESET, the search space, or the signaling format used to receive the first uplink grant information, where the terminal type is the secondary terminal or the primary terminal. If the terminal type is the secondary terminal, the first terminal apparatus may perform a procedure shown in FIG. 8, to implement opportunistic transmission or affiliated transmission.

In another example, a correspondence between the at least one of the RNTI, the CORESET, the search space, or the signaling format and at least one of the transmission resource, the transmission parameter, the beam direction, and the terminal type may be stored in the first terminal apparatus. For example, the correspondence may be preconfigured by the network device by using signaling, or may be defined in a protocol, or may be preconfigured in the first terminal apparatus. For a manner of using the correspondence, refer to the foregoing examples. Details are not described again.

In a possible implementation, when receiving the first uplink grant information, the first terminal apparatus may directly send the uplink data by using the time-frequency resource corresponding to the first uplink grant information, and does not need to perform an action of determining the beam direction or determining whether the beam direction meets the preset condition. For example, the base station configures the first terminal apparatus to receive the first uplink grant information only when the first terminal apparatus and the second terminal apparatus have a same beam direction. In this case, when the first terminal apparatus can receive the first uplink grant information, the first terminal apparatus may send the uplink data by using the corresponding time-frequency resource by default.

In addition, a correspondence between at least two of information such as the beam direction, the transmission resource, the transmission parameter, or the terminal type may be set by the network device or in a preconfigured or predefined manner, to implicitly indicate the information. For example, a correspondence between the beam direction and the transmission resource and/or the transmission parameter may be set, so that after determining the beam direction in any manner shown in this application, the first terminal apparatus may determine the transmission resource and/or the transmission parameter based on the correspondence between the beam direction and the transmission resource and/or the transmission parameter. Similarly, after determining the transmission resource and/or the transmission parameter in any manner shown in this application, the first terminal apparatus may also determine the beam direction based on the correspondence.

Optionally, before step S1002, if supporting uplink data transmission based on uplink opportunistic multiple access or affiliated multiple access (which is referred to as opportunistic transmission or affiliated transmission for short below) or having an opportunistic transmission or affiliated transmission capability, the first terminal apparatus may report a request or capability information to the network device, to indicate that the first terminal apparatus supports the opportunistic transmission or the affiliated transmission. Further, optionally, the network device may configure an opportunistic transmission mode or an affiliated transmission mode for the first terminal apparatus (for example, a terminal apparatus that supports the opportunistic transmission or the affiliated transmission, or a plurality of unspecified terminal apparatuses in a broadcast manner), or configure one or more of the following information: a parameter used to receive the first grant information sent by the network device, for example, the RNTI, the CORESET, the SS, or the signaling format, a parameter used to receive the first grant information sent by the second terminal device, for example, a PSCCH and/or PSSCH channel configuration, and the transmission resource and/or the transmission parameter used to send data.

In addition, optionally, before step S1002, if the second terminal apparatus can be used as the primary terminal or has a capability of the primary terminal, the second terminal apparatus may report capability information to the network device. Further, optionally, the network device may configure a primary terminal mode for the second terminal apparatus (for example, a terminal apparatus that can be used as the primary terminal, or a plurality of unspecified terminal apparatuses in a broadcast manner), or configure one or more of the following information: a parameter used to receive the first grant information and/or the second grant information sent by the network device, for example, the RNTI, the CORESET, the SS, or the signaling format, and a parameter used to send the first grant information to the second terminal device, for example, a PSCCH and/or PSSCH channel configuration.

It may be understood that, in any embodiment of this application, the network device may send configuration information to the first terminal apparatus and/or the second terminal apparatus by using one or more types of signaling in an RRC message, a MAC CE, or DCI, to configure an uplink transmission mode based on opportunistic transmission or multiple access and/or a related parameter. The related parameter includes but is not limited to the beam direction, the transmission resource used to send data, the transmission parameter, and a parameter used to receive an uplink grant, for example, the RNTI, the CORESET, the search space, or the signaling format.

It may be further understood that, in any embodiment of this application, optionally, the network device may preconfigure the primary terminal (including the second terminal apparatus) and the secondary terminal (including the first terminal apparatus), and configure a communication link between the primary terminal and the secondary terminal. For example, the network device preconfigures a group of terminals (for example, including the first terminal apparatus and the second terminal apparatus) that are at close locations or have similar beam directions and that may communicate with each other. One or more terminals in the group of terminals may be used as primary terminals to perform steps of the primary terminal in embodiments of the present invention, and one or more terminals in the group of terminals may be used as secondary terminals to perform steps of the secondary terminal in embodiments of the present invention. Optionally, in the group of terminals, one terminal may be the primary terminal, or may be the secondary terminal.

In the foregoing method, the first timer is set, and the first uplink grant information is received when the first timer runs, so that a case in which the first terminal apparatus performs monitoring for a long time when the first terminal apparatus fails to obtain a valid dynamic grant through monitoring can be avoided, thereby reducing power consumption of the terminal, improving data transmission reliability, and reducing a delay.

FIG. 11 is a schematic flowchart of another data transmission method according to this application. The method may include the following steps.

S1101: The first terminal apparatus determines whether a third condition is met.

The third condition includes one or more of the following: The first terminal apparatus is synchronized with the network device; channel quality of the first terminal apparatus meets a first preset value; a measurement result of at least one of beam directions configured by the network device for dynamic grant-free transmission of the first terminal apparatus meets a preset condition; or a data buffer size of the first terminal apparatus meets a second preset value. For details, refer to the related descriptions in step S1001. Details are not described herein again.

S1102: The first terminal apparatus performs a first-type dynamic grant-free transmission process if the third condition is met; or the first terminal apparatus determines, if the third condition is not met, whether a fourth condition is met.

The fourth condition includes one or more of the following: The first terminal apparatus is synchronized with the network device; the channel quality of the first terminal apparatus meets a third preset value; a measurement result of at least one of beam directions configured by the network device for opportunistic multiple access transmission of the first terminal apparatus meets a preset condition; or the data buffer size of the first terminal apparatus meets a fourth preset value. For details, refer to the related descriptions in step S1001. Details are not described herein again. For related descriptions of the first-type dynamic grant-free transmission process, refer to the foregoing descriptions. Details are not described herein again.

Optionally, in this step, the first terminal apparatus may directly perform an opportunistic multiple access transmission process without determining whether the fourth condition is met.

S1103: The first terminal apparatus performs the opportunistic multiple access transmission process if the fourth condition is met; or the first terminal apparatus determines, if the fourth condition is not met, whether a fifth condition is met.

The fifth condition includes one or more of the following: The channel quality of the first terminal apparatus meets a fifth preset value; or the data buffer size of the first terminal apparatus meets a sixth preset value. For details, refer to the related descriptions in step S1001. Details are not described herein again.

Optionally, in this step, the first terminal apparatus may directly perform a second-type dynamic grant-free transmission process without determining whether the fifth condition is met.

S1104: The first terminal apparatus performs the second-type dynamic grant-free transmission process if the fifth condition is met.

For related descriptions of the second-type dynamic grant-free transmission process, refer to the foregoing descriptions. Details are not described herein again.

In the method, steps S1103 and S1104 are optional steps.

In the method, the first-type dynamic grant-free transmission process is preferentially selected, to avoid resource contention of terminal devices and improve resource utilization. Secondly, the opportunistic multiple access transmission process is selected, and finally, the second-type dynamic grant-free transmission process is selected. In the second-type dynamic grant-free transmission process, terminal devices need to contend for a resource. Therefore, optimality of a solution can be ensured by using the foregoing selection sequence.

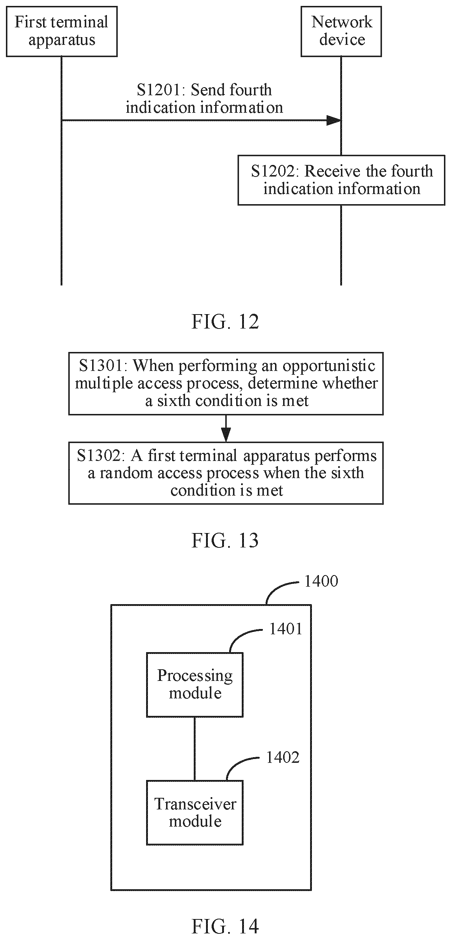

FIG. 12 is a schematic flowchart of another data transmission method according to this application. The method may include the following steps.

S1201: The first terminal apparatus sends fourth indication information to the network device.

Specifically, the fourth indication information is used by the first terminal apparatus to request, from the network device, to perform opportunistic transmission, or is used by the first terminal apparatus to notify the network device that opportunistic transmission is to be performed. The fourth indication information may be carried in uplink control information (Uplink Control Information, UCI) or a MAC CE and sent by the first terminal apparatus to the network device, or the fourth indication information may be a sequence. The fourth indication information may be used to assist the network device in detecting and receiving the opportunistic transmission of the first terminal apparatus.

S1202: The network device receives the fourth indication information from the first terminal apparatus.

For example, after receiving the fourth indication information, the network device may learn that the first terminal apparatus is to perform opportunistic transmission. Therefore, the network device may detect and receive data of the first terminal apparatus on a time-frequency resource indicated by first grant information, to improve reliability of detection and data receiving.

Optionally, when the fourth indication information is used by the first terminal apparatus to request, from the network device, to perform opportunistic transmission, after sending the fourth indication information, the first terminal apparatus receives fifth indication information sent by the network device to the first terminal apparatus, where the fifth indication information is used by the network device to respond to the fourth indication information sent by the first terminal apparatus, for example, indicate the first terminal apparatus to perform opportunistic transmission. Optionally, after receiving the fifth indication information, the first terminal apparatus performs an opportunistic multiple access process.

FIG. 13 is a schematic flowchart of another data transmission method according to this application. The method may include the following steps.

S1301: When performing an opportunistic multiple access process, the first terminal apparatus determines whether a sixth condition is met.

S1302: The first terminal apparatus performs a random access process when the sixth condition is met.

The sixth condition includes one or more of the following: None of measurement results of all beam directions configured by the network device for opportunistic multiple access of the first terminal apparatus meets a preset condition, or the first terminal apparatus determines that first grant information is an invalid grant. For related descriptions of that none of the measurement results of all the beam directions configured by the network device for the opportunistic multiple access of the first terminal apparatus meets the preset condition, refer to the descriptions in step S1001. Details are not described herein again. For related descriptions of that the first terminal apparatus determines that the first grant information is the invalid grant, refer to the descriptions in step S1001. Details are not described herein again.

The foregoing describes the method provided in embodiments of this application. To implement functions in the method provided in the foregoing embodiments of this application, a communication apparatus may include a hardware structure and/or a software module, to implement the foregoing functions by using the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 14 is a diagram of a structure of a data transmission apparatus according to this application. Based on a same technical concept, an embodiment of this application further provides a data transmission apparatus 1400. The data transmission apparatus 1400 may be a data transmission apparatus, an apparatus or a component in the data transmission apparatus, or an apparatus that can be used together with the data transmission apparatus. The data transmission apparatus 1400 may be a terminal device or a network device. In a design, the data transmission apparatus 1400 may include modules that are in one-to-one correspondence with the methods/operations/steps/actions in the foregoing method embodiments. The modules may be hardware circuits or software, or may be implemented by a combination of the hardware circuits and the software. In a design, the data transmission apparatus 1400 may include a processing module 1401 and a transceiver module 1402. The transceiver module 1402 may include a sending module and/or a receiving module.

For example, when the apparatus is configured to perform the method that is performed by the first terminal apparatus and that is described in the foregoing embodiments, the apparatus may include a transceiver module 1402 and a processing module 1401. The processing module 1401 is configured to start or restart a first timer, where the first timer includes an opportunistic multiple access timer (opma-Timer). The transceiver module 1402 is configured to receive first uplink grant information when the first timer runs, where a time-frequency resource corresponding to the first uplink grant information is used for uplink transmission of a second terminal apparatus, and the second terminal apparatus is different from the apparatus. The transceiver module 1402 is further configured to send uplink data on a video resource.

In a possible implementation, the transceiver module 1402 is configured to: receive the first uplink grant information from the second terminal apparatus; or receive the first uplink grant information from a network device.

In another possible implementation, the processing module 1401 is further configured to initiate a dynamic grant-free transmission process or a random access process when the first timer expires.

In another possible implementation, the processing module 1401 is further configured to start or restart the first timer when a first condition is met, where the first condition includes at least one of the following: when/after the apparatus initiates an opportunistic multiple access transmission process; when/after the apparatus receives the first uplink grant information; when/after the apparatus determines that the first uplink grant information is a valid grant; when/after the apparatus receives second uplink grant information, where the second uplink grant information is used to grant data transmission of the first terminal apparatus, or is used to grant data transmission of a group of terminal apparatuses including the first terminal apparatus; when/after the apparatus sends uplink data; when/after the apparatus completes a random access process; or when/after an opportunistic multiple access response monitoring timer and/or an opportunistic multiple access autonomous retransmission timer in the apparatus expire/expires.

In another possible implementation, the processing module 1401 is configured to autonomously trigger the opportunistic multiple access transmission process; the processing module 1401 is configured to initiate the opportunistic multiple access transmission process after sending first indication information to the network device, where the first indication information is used to notify the network device that the apparatus is to initiate the opportunistic multiple access transmission process, or is used by the apparatus to request to initiate the opportunistic multiple access transmission process; or the processing module 1401 is configured to initiate the opportunistic multiple access transmission process after receiving second indication information from the network device, where the second indication information indicates the apparatus to initiate the opportunistic multiple access transmission process.

In another possible implementation, the processing module 1401 is configured to start the first timer on a 1^{st} symbol/last symbol or after the 1^{st} symbol/last symbol of a time domain resource used to send the uplink data.

In another possible implementation, the processing module 1401 is configured to determine, based on an initial transmission situation of the apparatus when the first timer expires, to initiate the dynamic grant-free transmission process or the random access process.

In another possible implementation, the processing module 1401 is configured to determine, when the first timer expires and the apparatus does not perform initial transmission, to initiate the dynamic grant-free transmission process.

In another possible implementation, the processing module 1401 is configured to determine, when the first timer expires and the apparatus has performed initial transmission, to initiate the random access process.

In another possible implementation, the processing module 1401 is configured to stop the first timer when a second condition is met, where the second condition includes one or more of the following: when/after the apparatus terminates the opportunistic multiple access transmission process; when/after the apparatus receives third indication information from the network device, where the third indication information indicates that the opportunistic multiple access transmission process ends; when/after a radio resource control RRC state of the apparatus changes; or when/after a time alignment timer (Time Alignment Timer) in the apparatus expires.

In another possible implementation, the processing module 1401 is further configured to determine to choose to perform the opportunistic multiple access process.

In another possible implementation, the processing module 1401 is further configured to: before determining to choose to perform the opportunistic multiple access process, determine whether a third condition is met. The processing module 1401 is further configured to: perform a first-type dynamic grant-free transmission process if the third condition is met; or perform the opportunistic multiple access process if the third condition is not met, where the third condition includes one or more of the following: The apparatus is synchronized with the network device; channel quality of the apparatus meets a first preset value; a measurement result of at least one of beam directions configured by the network device for dynamic grant-free transmission of the apparatus meets a preset condition; or a data buffer size of the apparatus meets a second preset value.

For example, when the apparatus is configured to perform the method that is performed by the network device and that is described in the foregoing embodiments, the apparatus may include a transceiver module 1402 and a processing module 1401. The processing module 1401 may be configured to determine first uplink grant information, and the transceiver module 1402 may be configured to send the first uplink grant information. For the first uplink grant information, refer to the descriptions of the first uplink grant information in the foregoing method embodiments.

The transceiver module 1402 may be further configured to perform actions represented by arrows in the embodiments shown in FIG. 10 to FIG. 13, and the processing module 1401 is further configured to perform other operations in actions represented by rectangular boxes in the embodiments shown in FIG. 10 to FIG. 13. Details are not described herein again.

Division into modules in embodiments of this application is an example, is merely division into logical functions, and may be other division during actual implementation. **In** addition, functional modules in embodiments of this application may be integrated into one processor, or each of the modules may exist alone physically, or two or more modules may be integrated into one module. The integrated module may be implemented in a form of hardware, or may be implemented in a form of a software functional module.

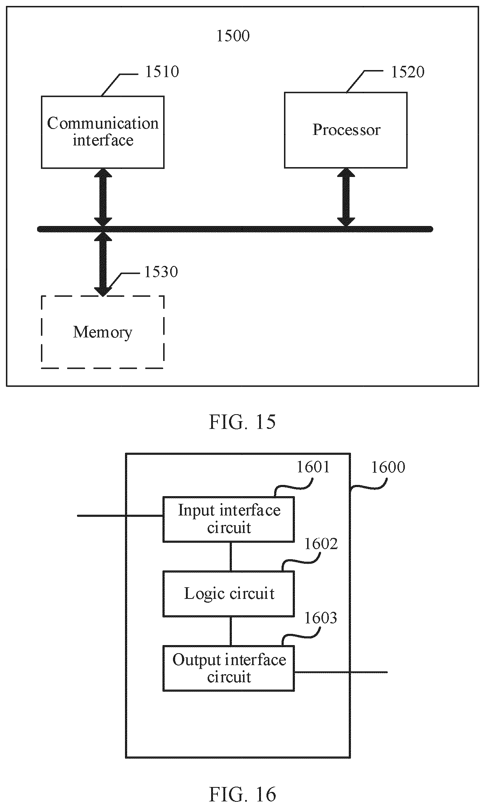

FIG. 15 is a diagram of a structure of another data transmission apparatus according to this application. The data transmission apparatus is configured to implement the data transmission method provided in this application. The data transmission apparatus 1500 may be an apparatus or a component located in a terminal device, may be a terminal device, or may be a network device or an apparatus or a component in the network device. The data transmission apparatus 1500 may be a data transmission apparatus, or may be an apparatus in the data transmission apparatus, or may be an apparatus that can be used together with the data transmission apparatus. The data transmission apparatus 1500 may be a chip system or a chip. **In** this embodiment of this application, the chip system may include a chip, or may include a chip and another discrete component. The data transmission apparatus 1500 includes at least one processor 1520, configured to implement the data transmission method provided in embodiments of this application. The data transmission apparatus 1500 may further include a communication interface 1510, and the communication interface 1510 may also be referred to as an input/output interface. **In** this embodiment of this application, the communication interface 1510 is configured to communicate with another apparatus by using a transmission medium. For example, when the data transmission apparatus 1500 is a chip, the data transmission apparatus 1500 performs transmission with another chip or component through the communication interface 1510. The processor 1520 is configured to implement the method described in the foregoing method embodiments.

For example, when the apparatus is configured to perform the method that is performed by the first terminal apparatus and that is described in the foregoing embodiments, the apparatus may include a communication interface 1510 and a processor 1520. The processor 1520 is configured to perform the following operations: starting or restarting a first timer, where the first timer includes an opportunistic multiple access timer (opma-Timer); receiving first uplink grant information through the communication interface 1510 when the first timer runs, where a time-frequency resource corresponding to the first uplink grant information is used for uplink transmission of a second terminal apparatus, and the second terminal apparatus is different from the apparatus; and sending uplink data based on the time-frequency resource through the communication interface 1510.

In a possible implementation, the processor 1520 is configured to receive the first uplink grant information from the second terminal apparatus through the communication interface 1510; or the processor 1520 is configured to receive the first uplink grant information from a network device through the communication interface 1510.

In another possible implementation, the processor 1520 is further configured to initiate a dynamic grant-free transmission process or a random access process when the first timer expires.

In another possible implementation, the processor 1520 is configured to start or restart the first timer when a first condition is met, where the first condition includes at least one of the following: when/after the apparatus initiates an opportunistic multiple access transmission process; when/after the apparatus receives the first uplink grant information; when/after the apparatus determines that the first uplink grant information is a valid grant; when/after the apparatus receives second uplink grant information, where the second uplink grant information is used to grant data transmission of the apparatus, or is used to grant data transmission of a group of terminal apparatuses including the apparatus; when/after the apparatus sends uplink data; when/after the apparatus completes a random access process; or when/after an opportunistic multiple access response monitoring timer and/or an opportunistic multiple access autonomous retransmission timer in the apparatus expire/expires.

In another possible implementation, the processor 1520 is configured to autonomously trigger the opportunistic multiple access transmission process; the processor 1520 is configured to initiate the opportunistic multiple access transmission process after sending first indication information to the network device, where the first indication information is used to notify the network device that the apparatus is to initiate the opportunistic multiple access transmission process, or is used by the apparatus to request to initiate the opportunistic multiple access transmission process; or the processor 1520 is configured to initiate the opportunistic multiple access transmission process after receiving second indication information from the network device, where the second indication information indicates the apparatus to initiate the opportunistic multiple access transmission process.

In another possible implementation, the processor 1520 is configured to start the first timer on a 1^{st} symbol/last symbol or after the 1^{st} symbol/last symbol of a time domain resource used to send the uplink data.

In another possible implementation, the processor 1520 is configured to determine, based on an initial transmission situation of the apparatus when the first timer expires, to initiate the dynamic grant-free transmission process or the random access process.

In another possible implementation, the processor 1520 is configured to determine, when the first timer expires and the apparatus does not perform initial transmission, to initiate the dynamic grant-free transmission process.

In another possible implementation, the processor 1520 is configured to determine, when the first timer expires and the apparatus has performed initial transmission, to initiate the random access process.

In another possible implementation, the processor 1520 is further configured to stop the first timer when a second condition is met, where the second condition includes one or more of the following: when/after the apparatus terminates the opportunistic multiple access transmission process; when/after the apparatus receives third indication information from the network device, where the third indication information indicates that the opportunistic multiple access transmission process ends; when/after a radio resource control RRC state of the apparatus changes; or when/after a time alignment timer (Time Alignment Timer) in the apparatus expires.

In another possible implementation, the processor 1520 is further configured to determine to choose to perform the opportunistic multiple access process.

In another possible implementation, the processor 1520 is further configured to: before determining to choose to perform the opportunistic multiple access process, determine whether a third condition is met. The processor 1520 is further configured to: perform a first-type dynamic grant-free transmission process if the third condition is met; or perform the opportunistic multiple access process if the third condition is not met, where the third condition includes one or more of the following: The apparatus is synchronized with the network device; channel quality of the apparatus meets a first preset value; a measurement result of at least one of beam directions configured by the network device for dynamic grant-free transmission of the apparatus meets a preset condition; or a data buffer size of the apparatus meets a second preset value.

For example, when the apparatus is configured to perform the method that is performed by the network device and that is described in the foregoing embodiments, the apparatus may include a communication interface 1510 and a processor 1520. The processor 1520 may be configured to determine first uplink grant information, and the communication interface 1510 may be configured to send the first uplink grant information. For the first uplink grant information, refer to the descriptions in the foregoing method embodiments.

The communication interface 1510 may be further configured to perform actions represented by arrows in the embodiments shown in FIG. 10 to FIG. 13, and the processor 1520 is further configured to perform other operations in actions represented by rectangular boxes in the embodiments shown in FIG. 10 to FIG. 13. Details are not described herein again.

The data transmission apparatus 1500 may further include at least one memory 1530, configured to store program instructions and/or data. The memory 1530 is coupled to the processor 1520. The coupling in this embodiment of this application may be an indirect coupling or a communication connection between apparatuses, units, or modules in an electrical form, a mechanical form, or another form, and is used for information exchange between the apparatuses, the units, or the modules. The processor 1520 may cooperate with the memory 1530. The processor 1520 may execute the program instructions stored in the memory 1530. At least one of the at least one memory may be integrated with the processor.

In this embodiment of this application, the memory 1530 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store the program instructions and/or the data.

In this embodiment of this application, the processor 1520 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

FIG. 16 is a diagram of a structure of another data transmission apparatus 1600 according to this application. The data transmission apparatus is configured to implement the data transmission method provided in this application. The data transmission apparatus 1600 may be an apparatus located in a terminal device, may be a terminal device, or may be a network device or an apparatus or a component located in the network device. The data transmission apparatus 1600 may be a data transmission apparatus, or may be an apparatus in the data transmission apparatus, or may be an apparatus that can be used together with the data transmission apparatus. The data transmission apparatus 1600 may be a chip system or a chip. In this embodiment of this application, the chip system may include a chip, or may include a chip and another discrete component. A part or all of the data transmission method provided in the foregoing embodiments may be implemented by hardware or software. When the data transmission method is implemented by hardware, the data transmission apparatus 1600 may include an input interface circuit 1601, a logic circuit 1602, and an output interface circuit 1603. Optionally, that the apparatus is configured to implement a function of a first terminal apparatus is used as an example. The input interface circuit 1601 may be configured to obtain first uplink grant information, the logic circuit 1602 may be configured to perform a processing action of the first terminal apparatus, and the output interface circuit 1603 may be configured to output uplink data.

Optionally, during specific implementation, the data transmission apparatus 1600 may be a chip or an integrated circuit.

Some or all of operations and functions performed by the data transmission apparatus described in the foregoing method embodiments of this application may be implemented by using the chip or the integrated circuit.

An embodiment of this application provides a computer-readable storage medium storing a computer program. The computer program includes instructions for performing the foregoing method embodiments.

An embodiment of this application provides a computer program product including instructions. When the computer program product runs on a computer, the computer is enabled to perform the foregoing method embodiments.

Persons skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although preferred embodiments of this application are described, persons skilled in the art can make changes and modifications to these embodiments after they learn of a basic inventive concept. Therefore, the appended claims are intended to be construed as to cover the preferred embodiments and all changes and modifications falling within the scope of this application.

Apparently, persons skilled in the art may make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. A data transmission method, wherein the method comprises:
starting or restarting, by a first terminal apparatus, a first timer, wherein the first timer comprises an opportunistic multiple access timer (opma-Timer);
receiving, by the first terminal apparatus, first uplink grant information when the first timer runs, wherein a time-frequency resource corresponding to the first uplink grant information is used for uplink transmission of a second terminal apparatus, and the second terminal apparatus is different from the first terminal apparatus; and
sending, by the first terminal apparatus, uplink data based on the time-frequency resource.

2. The method according to claim 1, wherein the receiving, by the first terminal apparatus, first uplink grant information comprises:
receiving, by the first terminal apparatus, the first uplink grant information from the second terminal apparatus; or
receiving, by the first terminal apparatus, the first uplink grant information from a network device.

3. The method according to claim 1 or 2, wherein the method further comprises:
initiating, by the first terminal apparatus, a dynamic grant-free transmission process or a random access process when the first timer expires.

4. The method according to any one of claims 1 to 3, wherein the starting or restarting, by a first terminal apparatus, a first timer comprises:
starting or restarting, by the first terminal apparatus, the first timer when a first condition is met, wherein
the first condition comprises at least one of the following:
when/after the first terminal apparatus initiates an opportunistic multiple access transmission process;
when/after the first terminal apparatus receives the first uplink grant information;
when/after the first terminal apparatus determines that the first uplink grant information is a valid grant;
when/after the first terminal apparatus receives second uplink grant information, wherein the second uplink grant information is used to grant data transmission of the first terminal apparatus, or is used to grant data transmission of a group of terminal apparatuses comprising the first terminal apparatus;
when/after the first terminal apparatus sends uplink data;
when/after the first terminal apparatus completes a random access process; or
when/after an opportunistic multiple access response monitoring timer and/or an opportunistic multiple access autonomous retransmission timer in the first terminal apparatus expire/expires.

5. The method according to claim 4, wherein that the first terminal apparatus initiates an opportunistic multiple access transmission process comprises one of the following:
the first terminal apparatus autonomously initiates the opportunistic multiple access transmission process;
the first terminal apparatus initiates the opportunistic multiple access transmission process after sending first indication information to the network device, wherein the first indication information is used to notify the network device that the first terminal apparatus is to initiate the opportunistic multiple access transmission process, or is used by the first terminal apparatus to request to initiate the opportunistic multiple access transmission process; or
the first terminal apparatus initiates the opportunistic multiple access transmission process after receiving second indication information from the network device, wherein the second indication information indicates the first terminal apparatus to initiate the opportunistic multiple access transmission process.

6. The method according to claim 4 or 5, wherein the starting or restarting, by the first terminal apparatus, the first timer when/after sending the uplink data comprises:
starting, by the first terminal apparatus, the first timer on a 1^{st} symbol/last symbol or after the 1^{st} symbol/last symbol of a time domain resource used to send the uplink data.

7. The method according to any one of claims 3 to 6, wherein the initiating, by the first terminal apparatus, a dynamic grant-free transmission process or a random access process when the first timer expires comprises:
determining, by the first terminal apparatus based on an initial transmission situation of the first terminal apparatus when the first timer expires, to initiate the dynamic grant-free transmission process or the random access process.

8. The method according to claim 7, wherein the determining, by the first terminal apparatus based on an initial transmission situation of the first terminal apparatus when the first timer expires, to initiate the dynamic grant-free transmission process or the random access process comprises:
initiating, by the first terminal apparatus, the dynamic grant-free transmission process when the first timer expires and the first terminal apparatus does not perform initial transmission.

9. The method according to claim 7, wherein the determining, by the first terminal apparatus based on an initial transmission situation of the first terminal apparatus when the first timer expires, to initiate the dynamic grant-free transmission process or the random access process comprises:
initiating, by the first terminal apparatus, the random access process when the first timer expires and the first terminal apparatus has performed initial transmission.

10. The method according to any one of claims 1 to 9, wherein the method further comprises:
stopping, by the first terminal apparatus, the first timer when a second condition is met, wherein
the second condition comprises one or more of the following:
when/after the first terminal apparatus terminates the opportunistic multiple access transmission process;
when/after the first terminal apparatus receives third indication information from the network device, wherein the third indication information indicates that the opportunistic multiple access transmission process ends;
when/after a radio resource control RRC state of the first terminal apparatus changes; or
when/after a time alignment timer (Time Alignment Timer) in the first terminal apparatus expires.

11. The method according to any one of claims 1 to 10, wherein the method further comprises:
determining, by the first terminal apparatus, to choose to perform the opportunistic multiple access process.

12. The method according to claim 11, wherein before the determining, by the first terminal apparatus, to choose to perform the opportunistic multiple access process, the method further comprises:
determining, by the first terminal apparatus, whether a third condition is met; and
performing, by the first terminal apparatus, a first-type dynamic grant-free transmission process if the third condition is met; or
performing, by the first terminal apparatus, the opportunistic multiple access process if the third condition is not met, wherein
the third condition comprises one or more of the following:
the first terminal apparatus is synchronized with the network device;
channel quality of the first terminal apparatus meets a first preset value;
a measurement result of at least one of beam directions configured by the network device for dynamic grant-free transmission of the first terminal apparatus meets a preset condition; or
a data buffer size of the first terminal apparatus meets a second preset value.

13. A data transmission apparatus, wherein the data transmission apparatus comprises at least one processor and a communication interface, and the at least one processor is configured to perform the following operations:
starting or restarting a first timer, wherein the first timer comprises an opportunistic multiple access timer (opma-Timer);
receiving first uplink grant information through the communication interface when the first timer runs, wherein a time-frequency resource corresponding to the first uplink grant information is used for uplink transmission of a second terminal apparatus, and the second terminal apparatus is different from the apparatus; and
sending uplink data based on the time-frequency resource.

14. The apparatus according to claim 13, wherein
the at least one processor is configured to receive the first uplink grant information from the second terminal apparatus through the communication interface; or
the at least one processor is configured to receive the first uplink grant information from a network device through the communication interface.

15. The apparatus according to claim 13 or 14, wherein
the at least one processor is further configured to initiate a dynamic grant-free transmission process or a random access process when the first timer expires.

16. The apparatus according to any one of claims 13 to 15, wherein
the at least one processor is configured to start or restart the first timer when a first condition is met, wherein
the first condition comprises at least one of the following:
when/after the apparatus initiates an opportunistic multiple access transmission process;
when/after the apparatus receives the first uplink grant information;
when/after the apparatus determines that the first uplink grant information is a valid grant;
when/after the apparatus receives second uplink grant information, wherein the second uplink grant information is used to grant data transmission of the apparatus, or is used to grant data transmission of a group of terminal apparatuses comprising the apparatus;
when/after the apparatus sends uplink data;
when/after the apparatus completes a random access process; or
when/after an opportunistic multiple access response monitoring timer and/or an opportunistic multiple access autonomous retransmission timer in the apparatus expire/expires.

17. The apparatus according to claim 16, wherein
the at least one processor is configured to autonomously trigger the opportunistic multiple access transmission process;
the at least one processor is configured to initiate the opportunistic multiple access transmission process after sending first indication information to the network device, wherein the first indication information is used to notify the network device that the apparatus is to initiate the opportunistic multiple access transmission process, or is used by the apparatus to request to initiate the opportunistic multiple access transmission process; or
the at least one processor is configured to initiate the opportunistic multiple access transmission process after receiving second indication information from the network device, wherein the second indication information indicates the apparatus to initiate the opportunistic multiple access transmission process.

18. The apparatus according to claim 16 or 17, wherein
the at least one processor is configured to start the first timer on a 1^{st} symbol/last symbol or after the 1^{st} symbol/last symbol of a time domain resource used to send the uplink data.

19. The apparatus according to any one of claims 15 to 18, wherein
the at least one processor is configured to determine, based on an initial transmission situation of the apparatus when the first timer expires, to initiate the dynamic grant-free transmission process or the random access process.

20. The apparatus according to claim 19, wherein
the at least one processor is configured to determine, when the first timer expires and the apparatus does not perform initial transmission, to initiate the dynamic grant-free transmission process.

21. The apparatus according to claim 19, wherein
the at least one processor is configured to determine, when the first timer expires and the apparatus has performed initial transmission, to initiate the random access process.

22. The apparatus according to any one of claims 13 to 21, wherein
the at least one processor is further configured to stop the first timer when a second condition is met, wherein
the second condition comprises one or more of the following:
when/after the apparatus terminates the opportunistic multiple access transmission process;
when/after the apparatus receives third indication information from the network device, wherein the third indication information indicates that the opportunistic multiple access transmission process ends;
when/after a radio resource control RRC state of the apparatus changes; or
when/after a time alignment timer (Time Alignment Timer) in the apparatus expires.

23. The apparatus according to any one of claims 13 to 22, wherein
the at least one processor is further configured to determine to choose to perform the opportunistic multiple access process.

24. The apparatus according to claim 23, wherein
the at least one processor is further configured to: before determining to choose to perform the opportunistic multiple access process, determine whether a third condition is met; and
the at least one processor is further configured to: perform a first-type dynamic grant-free transmission process if the third condition is met; or perform the opportunistic multiple access process if the third condition is not met, wherein
the third condition comprises one or more of the following:
the apparatus is synchronized with the network device;
channel quality of the apparatus meets a first preset value;
a measurement result of at least one of beam directions configured by the network device for dynamic grant-free transmission of the apparatus meets a preset condition; or
a data buffer size of the apparatus meets a second preset value.

25. A data transmission method, comprising:
starting or restarting, by a first terminal apparatus, a first timer, wherein the first timer comprises an opportunistic multiple access timer (opma-Timer);
sending, by a network device, first uplink grant information to the first terminal apparatus when the first timer runs;
receiving, by the first terminal apparatus, the first uplink grant information from the network device when the first timer runs, wherein a time-frequency resource corresponding to the first uplink grant information is used for uplink transmission of a second terminal apparatus, and the second terminal apparatus is different from the first terminal apparatus;
sending, by the first terminal apparatus, uplink data based on the time-frequency resource; and
receiving, by the network device, the uplink data from the first terminal apparatus based on the time-frequency resource.

26. A computer-readable storage medium, wherein the computer-readable storage medium stores instructions, and when the instructions are run on a processor, the method according to any one of claims 1 to 12 is implemented.
